# EUROPÄISCHE PATENTSCHRIFT

(11) **EP 1 252 688 B1**
(45) Veröffentlichungstag und Bekanntmachung des Hinweises auf die Patenterteilung: **20.08.2008**
(21) Anmeldenummer: 01915187.7
(22) Anmeldetag: 02.02.2001
(51) Int. Cl.: H01S 3/06

(54) **LASERVERSTÄRKERSYSTEM**
LASER AMPLIFIER SYSTEM
SYSTEME D'AMPLIFICATION LASER

(30) Priorität: 05.02.2000 DE 10005194
(43) Veröffentlichungstag der Anmeldung: 30.10.2002
(73) Patentinhaber: UNIVERSITÄT STUTTGART INSTITUT FÜR STRAHLWERKZEUGE, 70569 Stuttgart (DE)
(72) Erfinder: ERHARD, Steffen, 71126 Gäufelden (DE); GIESEN, Adolf, 71272 Renningen (DE)
(74) Vertreter: Beck, Jürgen
(86) Internationale Anmeldenummer: PCT/EP2001/001130
(87) Internationale Veröffentlichungsnummer: WO 2001/057971

(56) Entgegenhaltungen:
- WO-A-01/03260
- US-A- 5 546 222
- DRUON F ET AL: "HIGH-REPETITION-RATE 300-PS PULSED ULTRAVIOLET SOURCE WITH A PASSIVELY Q-SWITCHED MICROCHIP LASER AND A MULTIPASS AMPLIFIER" OPTICS LETTERS,US,OPTICAL SOCIETY OF AMERICA, WASHINGTON, Bd. 24, Nr. 7, 1. April 1999 (1999-04-01), Seiten 499-501, XP000829716 ISSN: 0146-9592
- OLSON T E ET AL: "MULTIPAS DIODE-PUMPED ND:YAG OPTICAL AMPLIFIERS AT 1.06 MUM AND 1.32 MUM" IEEE PHOTONICS TECHNOLOGY LETTERS,US,IEEE INC. NEW YORK, Bd. 6, Nr. 5, 1. Mai 1994 (1994-05-01), Seiten 605-608, XP000446972 ISSN: 1041-1135
- CHAMBARET J P ET AL: "GENERATION OF 25-TW, 32-FS PULSES AT 10 HZ" OPTICS LETTERS,US,OPTICAL SOCIETY OF AMERICA, WASHINGTON, Bd. 21, Nr. 23, 1. Dezember 1996 (1996-12-01), Seiten 1921-1923, XP000639747 ISSN: 0146-9592

## Beschreibung

Die Erfindung betrifft ein Laserverstärkersystem umfassend einen ein laseraktives Medium aufweisenden Festkörper, eine Anregungsquelle zur Erzeugung eines angeregten Zustandes des laseraktiven Mediums und ein den Festkörper mehrfach durchsetzendes Verstärkerstrahlungsfeld, aus welchem ein Laserstrahl auskoppelbar ist.

Ein derartiges Laserverstärkersystem ist beispielsweise aus der EP 0 632 551 bekannt.

Bei diesem Laserverstärkungssystem wird allerdings das Verstärkerstrahlungsfeld auch bei mehrfachem Hindurchtreten durch den Festkörper so geführt, daß die einzelnen Äste in sich selbst zurückreflektiert werden.

Der Nachteil eines derart ausgebildeten Verstärkerstrahlungsfeld besteht darin, daß eine hohe Zahl von Durchgängen des Verstärkerstrahlungsfeldes durch den Festkörper nur sehr aufwendig erreichbar ist.

US-A-5 546 222, OPTICS LETTERS,US,OPTICAL SOCIETY OF AMERICA, WASHINGTON, Bd. 24, Nr. 7. 1. April 1999 (1999-04-01), Seiten 499-501, IEEE PHOTONICS TECHNOLOGY LETTERS,US,IEEE INC. NEW YORK. Bd. 6, Nr. 5, 1. Mai 1994 (1994-05-01), Seiten 605-608, und OPTICS LETTERS,US,OPTICAL SOCIETY OF AMERICA, WASHINGTON, Bd. 21, Nr. 23, 1. Dezember 1996 (1996-12-01), Seiten 1921-1923, offenbaren Laserverstärkersysteme gemäss dem Oberbegriff des Anspruchs 1.

Der Erfindung liegt daher die Aufgabe zugrunde, ein Laserverstärkersystem der gattungsgemäßen Art derart zu verbessern, daß mit möglichst einfachen optischen Mitteln eine möglichst hohe Zahl von Durchgängen des Verstärkerstrahlungsfeldes durch den Festkörper erreichbar ist.

Diese Aufgabe wird bei einem Laserverstärkersystem der eingangs beschriebenen Art erfindungsgemäß durch Anspruch 1 gelöst.

Der Vorteil der erfindungsgemäßen Lösung ist darin zu sehen, daß diese eine einfache Möglichkeit schafft, eine Vielzahl von Durchgängen des Verstärkerstrahlungsfeldes durch den Festkörper zu erreichen und dabei dadurch, daß die einfallenden Äste und die ausfallenden Äste jeweils untereinander lokal verschieden verlaufen, eine optimale Ausnutzung des angeregten laseraktiven Mediums im Festkörper erfolgt.

Besonders günstig ist es, wenn die einfallenden Äste stets in denselben Festkörper einfallen.

Noch günstiger ist es, wenn die einfallenden Äste stets in denselben Volumenbereich des Festkörpers einfallen.

Um den Strahlquerschnitt der aus ausfallenden Ästen wiederum durch die Umlenkeinheiten geformten einfallenden Äste nicht zu vergrößern, ist vorzugsweise vorgesehen, daß die Strahlungsfeldführungsoptik aus dem ausfallenden Ast nach einer Zwischenfokussierung den einfallenden Ast formt.

Die Zwischenfokussierung kann dabei unabhängig von der Umlenkeinheit erfolgen. Um die Ausbildung der erfindungsgemäßen Strahlführungsoptik möglichst kompakt zu gestalten ist vorzugsweise vorgesehen, daß die Zwischenfokussierung im Bereich der Umlenkeinheit erfolgt.

Eine besonders zweckmäßige Lösung sieht dabei vor, daß durch die Zwischenfokussierung ein zwischen zwei Umlenkelementen der Umlenkeinheit liegender Zwischenfokus entsteht, so daß vermieden wird, daß der Zwischenfokus unmittelbar in einer Umlenkeinheit liegt.

Besonders günstig ist es dabei, um beide Umlenkelemente möglichst weit weg vom Zwischenfokus anzuordnen, wenn der Zwischenfokus ungefähr mittig zwischen den zwei Umlenkelementen liegt.

Da nahe des Zwischenfokus die Intensität pro Flächeneinheit der Querschnittsfläche des Strahlungsfeldes ansteigt, ist vorzugsweise vorgesehen, daß der optische Weg zwischen den zwei beiderseits des Zwischenfokus liegenden Umlenkelementen größer ist als ein Abstand zwischen einem in die Umlenkeinheit eintretenden Eingangsast und einem aus der Umlenkeinheit austretenden Ausgangsast.

Besonders günstig ist es dabei, wenn der optische Weg zwischen den zwei beiderseits des Zwischenfokus liegenden Umlenkelementen mindestens dem zweifachen Abstand von Eingangsast und Ausgangsast entspricht.

Eine besonders günstige Lösung sieht vor, daß die Umlenkeinheit das Verstärkerstrahlungsfeld in einer Schleife führt, die bezogen auf einen Eingangsast und einen Ausgangsast der Umlenkeinheit in einer Expansionsrichtung eine Ausdehnung aufweist, die größer als der Abstand zwischen dem Eingangsast und dem Ausgangsast ist.

Durch diese Expansion des Strahlungsfeldes in der Expansionsrichtung besteht die Möglichkeit, zwischen den beiderseits des Zwischenfokus liegenden Umlenkelementen einen möglichst großen Abstand zu erhalten.

Vorzugsweise beträgt die Ausdehnung der Schleife in der Expansionsrichtung mindestens das zweifache des Abstandes zwischen dem Eingangsast und dem Ausgangsast.

Im Rahmen der bislang beschriebenen Ausführungsbeispiele wurde davon ausgegangen, daß die Strahlungsfeldführungsoptik mindestens einen ausfallenden Ast in einen einfallenden Ast unter Heranziehung einer Umlenkeinheit umformt.

Besonders einfach läßt sich die erfindungsgemäße Lösung jedoch dann ausbilden, wenn die Strahlungsfeldführungsoptik mehrere ausfallende Äste mittels mindestens einer Umlenkeinheit in mehrere einfallende Äste umformt.

Im Rahmen der bisherigen Beschreibung der einzelnen Ausführungsbeispiele wurde nicht näher darauf eingegangen, wie die jeweils einfallenden und ausfallenden Äste des Verstärkerstrahlungsfeldes ausgebildet sein sollen.

Prinzipiell wäre es denkbar, diese als divergente oder konvergente Äste auszuführen, allerdings mit dem Nachteil, daß sich bei Erhöhung der Zahl der Durchgänge auch der Querschnitt der Äste vergrößern würde.

Um den Querschnitt der einfallenden und ausfallenden Äste gleich groß halten zu können und somit einen Volumenbereich des Festkörpers mit angeregtem laseraktivem Medium optimal zur Verstärkung des Strahlungsfeldes ausnützen zu können, ist vorzugsweise vorgesehen, daß die Strahlungsfeldführungsoptik ein Verstärkerstrahlungsfeld bildet, bei welchem die in den Festkörper einfallenden Äste und die aus dem Festkörper ausfallenden Äste kollimierte Äste sind.

Um jeweils aus einem kollimierten ausfallenden Ast wiederum einen kollimierten einfallenden Ast zu formen, ist vorzugsweise vorgesehen, daß die Strahlungsfeldführungsoptik mindestens einfach rekollimierend ausgebildet ist.

Rekollimierend bedeutet dabei die Umsetzung eines kollimierten Strahlungsfeldes über eine Zwischenfokussierung in ein kollimiertes Strahlungsfeld.

Noch besser ist es, wenn die Strahlungsfeldführungsoptik mehrfach rekollimierend ausgebildet ist, so daß mehrere kollimierte ausfallende Äste wiederum in einen kollimierten einfallenden Ast umgeformt werden können.

Bei Ausbildung der einfallenden Äste und der ausfallenden Äste als kollimierte Äste ist es hinsichtlich der Ausbildung des Verstärkerstrahlungsfeldes besonders günstig, wenn durch die Strahlungsfeldführungsoptik bei jedem Rekollimieren, das heißt beim Umformen eines kollimierten ausfallenden Astes in einen kollimierten einfallenden Ast, ein zwischenfokussierter Ast zwischen dem kollimierten ausfallenden Ast und dem kollimierten einfallenden Ast gebildet wird. Damit läßt sich der optische Strahlquerschnitt in besonders günstiger Weise aufrecht erhalten.

Hinsichtlich des Zusammenwirkens der Rekollimierung mit der Umlenkeinheit wurden bislang keine näheren Angaben gemacht. So sieht eine besonders vorteilhafte Lösung vor, daß der bei der Rekollimierung erforderliche zwischenfokussierte Ast jeweils eine erfindungsgemäße Umlenkeinheit durchläuft.

Prinzipiell wäre es denkbar, für jede Rekollimierung eine eigene Rekollimierungsoptik der Strahlungsfeldführungsoptik vorzusehen.

Zweckmäßigerweise ist dabei vorgesehen, daß der zwischenfokussierte Ast einen optischen Weg durchläuft, welcher der zweifachen Brennweite der Rekollimierung entspricht.

Hinsichtlich der Ausbildung der verschiedenen Rekollimierungsoptiken wäre es denkbar, unterschiedliche Rekollimierungen mit unterschiedlichen Brennweiten durchzuführen.

Besonders günstig ist es, wenn alle Rekollimierungsoptiken dieselbe Brennweite aufweisen.

Besonders günstig ist es, wenn mehrere Rekollimierungsoptiken zu einem strahlungsfeldformenden Element zusammengefaßt sind.

Ein erfindungsgemäßes strahlungsfeldformendes Element, welches mindestens eine Rekollimierung bewirkt, kann als vom Verstärkerstrahlungsfeld durchsetztes Element ausgebildet sein, wie beispielsweise ein Linsensystem oder im einfachsten Fall eine einzige Linse.

Alternativ dazu ist es aber auch denkbar, das strahlungsfeldformende Element als reflektierendes Element auszubilden.

Im einfachsten Fall ist das reflektierend ausgebildete strahlungsfeldformende Elemente als Hohlspiegel ausgebildet.

Ein derartiges strahlformendes Element muß erfindungsgemäß für jede Rekollimierung ein fokussierendes Element und ein kollimierendes Element aufweisen, so daß ein Umformen eines kollimierten ausfallenden Astes in den zwischenfokussierten Ast und dann wieder ein Umformen des zwischenfokussierten Astes in einen kollimierten einfallenden Ast möglich ist.

Besonders günstig ist eine Lösung, bei welcher mehrere fokussierende Elemente und mehrere kollimierende Elemente zu einem strahlungsfeldformenden Element zusammengefaßt sind.

Besonders günstig ist es dabei, wenn dieses eine strahlungsfeldformende Element mit unterschiedlichen Bereichen kollimierende und fokussierende Elemente bildet.

Eine besonders günstige Ausführungsform eines strahlungsfeldformenden Elements sieht vor, daß das Strahlungsfeld formende Element rotationssymmetrisch zu einer durch den Festkörper hindurchverlaufenden Mittelachse ausgebildet ist.

Eine derartige rotationssymmetrische Ausbildung sieht entweder ein rotationssymmetrisch zur Mittelachse ausgebildetes und angeordnetes Linsensystem vor oder ein rotationssymmetrisch zur Mittelachse ausgebildetes und wirkendes Spiegelsystem.

Ein derartiges Spiegelsystem ist im einfachsten Fall so ausgebildet, daß die kollimierenden und fokussierende Elemente Bereiche eines rotationssymmetrisch zur Mittelachse ausgebildeten Hohlspiegels sind.

Ein derartiger Hohlspiegel kann beispielsweise ein Parabolspiegel sein.

Es ist aber auch denkbar, diesen Hohlspiegel als torischen Spiegel auszubilden.

Hinsichtlich der Zahl der Umlenkeinheiten wurden im Zusammenhang mit der bisherigen Erläuterung der einzelnen Ausführungsbeispiele keine näheren Angaben gemacht.

So sieht ein vorteilhaftes Ausführungsbeispiel vor, daß die Strahlungsfeldführungsoptik mindestens zwei Umlenkeinheiten umfaßt, wobei jede dieser Umlenkeinheiten aus einem aus einem der ausfallenden Äste gebildeten Eingangsast des Verstärkerstrahlungsfeldes einen von diesem lokal getrennt verlaufenden Ausgangsast formt, aus welchem der entsprechende einfallende Ast gebildet wird.

Prinzipiell wäre es denkbar, für jeden aus einem ausfallenden Ast zu bildenden einfallenden Ast eine eigene Umlenkeinheit vorzusehen.

Eine konstruktiv besonders günstige Lösung sieht jedoch vor, daß mindestens eine der Umlenkeinheiten aus mindestens zwei aus aus dem Festkörper ausfallenden Ästen gebildeten Eingangsäste mindestens zwei Ausgangsäste formt, aus welchen die entsprechenden in den Festkörper einfallende Äste gebildet werden, so daß sich die Zahl der Umlenkeinheiten vorteilhafterweise auf zwei reduzieren läßt.

Ferner ist es besonders günstig, wenn die Strahlungsfeldführungsoptik zwei Umlenkeinheiten umfaßt, und wenn ein Ausgangsast jeder der Umlenkeinheiten zur Bildung eines in den Festkörper einfallenden Astes führt, aus welchem seinerseits nach Durchsetzen des Festkörpers ein ausfallender Ast entsteht, aus welchem ein Eingangsast der jeweils anderen Umlenkeinheit gebildet wird.

Eine derartige Lösung läßt in besonders günstiger Weise eine Verknüpfung der zwei Umlenkeinheiten zu, so daß eine besonders kompakte optische Lösung entsteht.

Eine weitere vorteilhafte erfindungsgemäße Strahlungsfeldführungsoptik sieht vor, daß diese eine erste und eine zweite Umlenkeinheit umfaßt und daß die beiden Umlenkeinheiten jeweils durch Umlenkung des Verstärkerstrahlungsfeldes relativ zu einer einzigen der jeweiligen Umlenkeinheit zugeordneten Umlenksymmetrieebene mindestens drei aus mindestens drei verschiedenen ausfallenden Ästen des Verstärkerstrahlungsfeldes gebildete Eingangsäste in mindestens drei entsprechend lokal von den Eingangsästen getrennt verlaufende Ausgangsäste umsetzt, aus welchen mindestens drei einfallende Äste entstehen.

Eine weitere vorteilhafte Ausbildung der erfindungsgemäßen Strahlungsfeldführungsoptik sieht vor, daß die Strahlungsfeldführungsoptik mindestens eine Umlenkeinheit aufweist und daß die Umlenkeinheit aus mindestens einem Eingangsast einen bezüglich einer Mittelachse der Strahlungsfeldführungsoptik um einen derartigen Winkelabstand versetzt liegenden Ausgangsast formt, daß im Winkelbereich zwischen diesem Eingangsast und dem daraus gebildeten Ausgangsast mindestens ein weiterer Eingangsast liegt.

Eine weitere besonders günstige Lösung sieht vor, daß die Strahlungsfeldführungsoptik eine erste Umlenkeinheit aufweist, welche das Verstärkerstrahlungsfeld relativ zu einer ersten Umlenksymmetrieebene umlenkt und eine zweite Umlenkeinheit aufweist, welche das Verstärkerstrahlungsfeld relativ zu einer zweiten Umlenksymmetrieebene umlenkt und daß die Umlenksymmetrieebenen in einem Winkel zueinander verlaufen, der vorzugsweise 360° geteilt durch die Summe der bei einem Durchlauf des Verstärkerstrahlungsfeldes durch die Strahlungsfeldführungsoptik und den Festkörper auftretenden einfallenden und ausfallenden Äste entspricht.

Unter einem Durchlauf des Verstärkerstrahlungsfeldes ist dabei eine Ausbreitung des Verstärkerstrahlungsfeldes durch die Strahlungsfeldführungsoptik zu verstehen, bei welchem die Ausbreitungsrichtung beibehalten wird.

Hinsichtlich der Anordnung der Umlenksymmetrieebene relativ zu der Mittelachse wurden bislang keine näheren Angaben gemacht. Eine besonders günstige Lösung sieht vor, daß die Umlenksymmetrieebene parallel zur Mittelachse verläuft.

Besonders günstig ist es, wenn die Umlenksymmetrieebene durch die Mittelachse hindurchverläuft.

Hinsichtlich der Anordnung der Eingangsäste und der Ausgangsäste der Umlenkeinheiten wurden bislang keine näheren Angaben gemacht. So ist es besonders günstig, wenn die Eingangsäste des Verstärkerstrahlungsfeldes räumlich getrennt voneinander verlaufen.

Dabei ist es besonders günstig, wenn die Eingangsäste des Verstärkerstrahlungsfeldes relativ zueinander in Winkelabständen um die Mittelachse der Strahlungsfeldführungsoptik herum angeordnet sind.

Ferner ist es vorteilhaft, wenn die Ausgangsäste getrennt voneinander verlaufen.

Ebenfalls ist es dabei günstig, wenn die Ausgangsäste getrennt von den Eingangsästen verlaufen.

Besonders zweckmäßig ist es, wenn die Ausgangsäste relativ zueinander und relativ zu den Eingangsästen in Winkelabständen um die Mittelachse der Strahlungsfeldführungsoptik herum angeordnet sind.

Besonders vorteilhaft ist es dabei, wenn die bei einem Durchlauf des Verstärkerstrahlungsfeldes durch die Strahlungsfeldführungsoptik entstehenden Eingangsäste und Ausgangsäste überlappungsfrei im Raum um die Mittelachse der Strahlungsfeldführungsoptik herum angeordnet sind.

Noch vorteilhafter ist es, wenn die Eingangsäste und Ausgangsäste sowie ein einfallender Ast des Verstärkerstrahlungsfelds bei einem Durchlauf überlappungsfrei im Raum um die Mittelachse der Strahlungsfeldführungsoptik herum angeordnet sind.

Eine besonders vorteilhafte Lösung sieht dabei vor, daß die Eingangsäste und Ausgangsäste jeweils in getrennten Raumsegmenten um die Mittelachse der Strahlungsfeldführungsoptik herum angeordnet sind und sich innerhalb der Raumsegmente quer zu ihrer Ausbreitungsrichtung ausdehnen.

Vorzugsweise sind die Raumsegmente so angeordnet, daß sie sich über ungefähr denselben Winkelbereich um die Mittelachse herum erstrecken.

Eine besonders vorteilhafte Raumausnutzung ist dann gegeben, wenn die Raumsegmente der Eingangsäste und der Ausgangsäste sowie das Raumsegment des einfallenden Astes im wesentlichen die Mittelachse umschließen.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine schematische Darstellung eines ersten Ausführungsbeispiels des erfindungsgemäßen Laserverstärkersystems in der Perspektive;
- Fig. 2: einen Schnitt längs Linie 2-2 in Fig. 1;
- Fig. 3: eine Darstellung des erfindungsgemäßen Laserverstärkersystems gemäß Fig. 1, wobei vom Verstärkerstrahlungsfeld ein erster einfallender Ast, ein erster ausfallender Ast und ein erster zwischenfokussierter Ast dargestellt sind;
- Fig. 4: einen Schnitt längs Linie 4-4 in Fig. 3;
- Fig. 5: eine Darstellung des erfindungsgemäßen Laserverstärkersystems gemäß Fig. 1, wobei vom Verstärkerstrahlungsfeld ein zweiter einfallender Ast, ein zweiter ausfallender Ast und ein zweiter zwischenfokussierter Ast dargestellt sind;
- Fig. 6: einen Schnitt längs Linie 6-6 in Fig. 5;
- Fig. 7: eine Darstellung des Laserverstärkersystems gemäß Fig. 1, wobei vom Verstärkerstrahlungsfeld ein dritter einfallender Ast, ein dritter ausfallender Ast und ein dritter zwischenfokussierter Ast dargestellt sind;
- Fig. 8: einen Schnitt längs Linie 8-8 in Fig. 7;
- Fig. 9: eine Darstellung des Laserverstärkersystems gemäß Fig. 1, wobei vom Verstärkerstrahlungsfeld ein vierter einfallender Ast, ein vierter ausfallender Ast und ein vierter zwischenfokussierter Ast dargestellt sind;
- Fig. 10: einen Schnitt längs Linie 10-10 in Fig. 9;
- Fig. 11: eine Darstellung eines zweiten Ausführungsbeispiels eines erfindungsgemäßen Laserverstärkersystems ähnlich Fig. 1;
- Fig. 12: einen Schnitt längs Linie 12-12 in Fig. 11;
- Fig. 13: eine Darstellung des Laserverstärkersystems gemäß Fig. 11, wobei vom Verstärkerstrahlungsfeld der erste einfallende Ast, der erste ausfallende Ast und der erste zwischenfokussierte Ast dargestellt sind;
- Fig. 14: einen Schnitt längs Linie 14-14 in Fig. 13;
- Fig. 15: eine Darstellung des Laserverstärkersystems gemäß Fig. 11, wobei vom Verstärkerstrahlungsfeld der zweite einfallende Ast, der zweite ausfallende Ast und der zweite zwischenfokussierte Ast dargestellt sind;
- Fig. 16: einen Schnitt längs Linie 16-16 in Fig. 15;
- Fig. 17: eine Darstellung des Laserverstärkersystems gemäß Fig. 11, wobei vom Verstärkerstrahlungsfeld der dritte einfallende Ast, der ausfallende Ast und der dritte zwischenfokussierte Ast dargestellt sind;
- Fig. 18: einen Schnitt längs Linie 18-18 in Fig. 17;
- Fig. 19: eine Darstellung des Laserverstärkersystems gemäß Fig. 11, wobei vom Verstärkerstrahlungsfeld der vierte einfallende Ast, der vierte ausfallende Ast und der vierte zwischenfokussierte Ast dargestellt sind;
- Fig. 20: einen Schnitt längs Linie 20-20 in Fig. 19;
- Fig. 21: eine Darstellung ähnlich Fig. 1 eines dritten Ausführungsbeispiels des erfindungsgemäßen Laserverstärkersystems;
- Fig. 22: einen Schnitt längs Linie 22-22 in Fig. 21;
- Fig. 23: eine Darstellung des Laserverstärkersystems entsprechend Fig. 21, wobei vom Verstärkerstrahlungsfeld der erste einfallende Ast, der erste ausfallende Ast, der erste zwischenfokussierte Ast und der zweite einfallende Ast dargestellt sind;
- Fig. 24: einen Schnitt längs Linie 24-24 in Fig. 23;
- Fig. 25: eine Darstellung des Laserverstärkersystems gemäß Fig. 21, wobei vom Verstärkerstrahlungsfeld der zweite ausfallende Ast, der zweite zwischenfokussierte Ast und der dritte einfallende Ast dargestellt sind;
- Fig. 26: einen Schnitt längs Linie 26-26 in Fig. 25;
- Fig. 27: eine Darstellung des Laserverstärkersystems in Fig. 21, wobei vom Verstärkerstrahlungsfeld der dritte ausfallende Ast, der dritte zwischenfokussierte Ast, der vierte einfallende Ast und der vierte ausfallende Ast dargestellt sind und
- Fig. 28: einen Schnitt längs Linie 28-28 in Fig. 27.

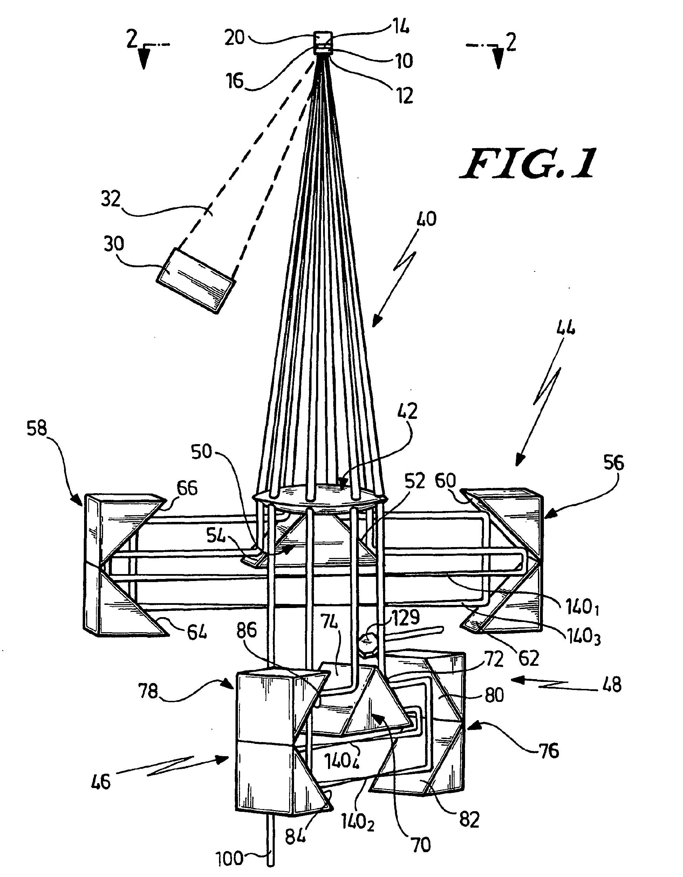

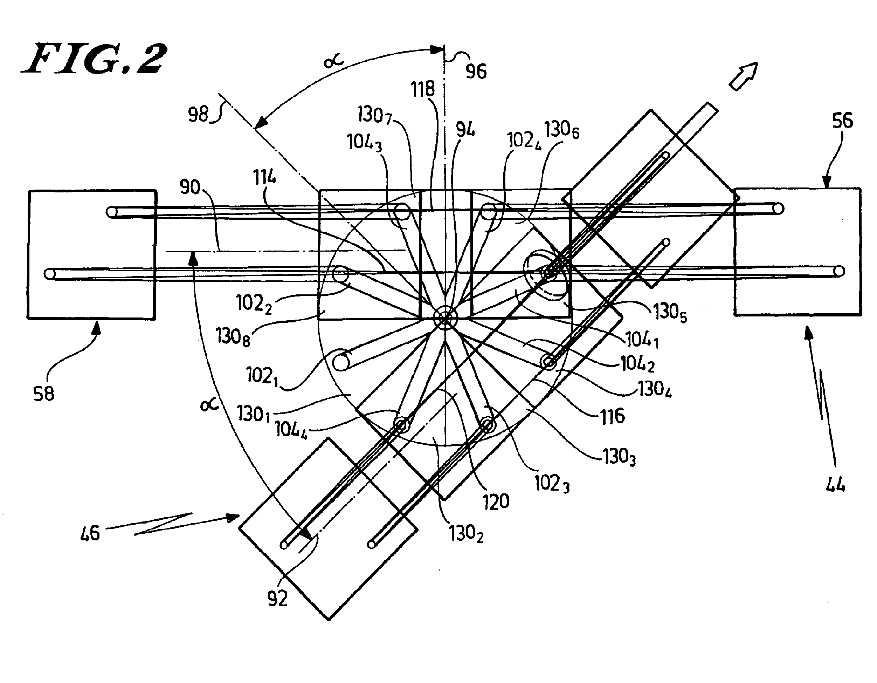

Ein in Fig. 1 und 2 insgesamt dargestelltes erstes Ausführungsbeispiel eines erfindungsgemäßen Laserverstärkersystems umfaßt einen Festkörper 10, in welchem ein laseraktives Medium angeordnet ist.

Ein derartiges laseraktives Medium ist beispielsweise ein solches, wie in der EP 0 632 551 beschrieben.

Der Festkörper 10 weist eine frontseitige Flachseite 12 und eine rückseitige Flachseite 14 auf und liegt mit der rückseitigen Flachseite 14 auf einem als Ganzes mit 16 bezeichneten Reflektor auf, welcher beispielsweise eine auf der rückseitigen Flachseite 14 aufgetragene Schicht ist.

Ferner erfolgt über den rückseitigen Reflektor 16 mittelts einer Kühleinrichtung 20 ein Kühlen des Festkörpers 10, wobei die Kühleinrichtung beispielsweise ein Kühlfinger ist, wie ebenfalls in der EP 0 632 551 beschrieben.

Die beiden Flachseiten 12 und 14 des Festkörpers 10 sind nicht zwingend als Ebenen ausgebildet sondern können beispielsweise auch eine Wölbung aufweisen.

Ein Pumpen des Festkörpers 10 erfolgt über eine bekannte Pumpeinrichtung, beispielsweise ebenfalls über ein Pumpstrahlungsfeld, das ebenfalls beispielsweise wie in der EP 0 632 551 geführt sein kann, es ist aber auch denkbar, das Pumpstrahlungsfeld entsprechend der deutschen Patentanmeldung 198 35 107 oder 198 35 108 zu führen und in den Festkörper 10 eintreten zu lassen.

Aus diesem Grund ist lediglich schematisch eine Pumpstrahlungsquelle 30 dargestellt, welche ein in den Festkörper 10 einfallendes Pumpstrahlungsfeld 32 erzeugt, das vorzugsweise auf den Festkörper 10 fokussiert ist.

Zur optimalen Auskopplung der vom laseraktiven Medium erzeugten kohärenten Strahlung ist ein als Ganzes mit 40 bezeichnetes Verstärkerstrahlungsfeld vorgesehen, welches ein strahlungsfeldformendes Element 42 sowie eine erste Umlenkeinheit 44 und eine zweite Umlenkeinheit 46 umfaßt.

Das strahlungsfeldformende Element 42 sowie die Umlenkeinheiten 44 und 46 bilden zusammen insgesamt eine als Ganzes mit 48 bezeichnete Strahlungsfeldführungsoptik, welche die Ausbildung des Verstärkerstrahlungsfelds 40 bestimmt.

Das strahlungsfeldformende Element ist beispielsweise ein Element, welches in der Lage ist, einen kollimierten Ast in einen fokussierten Ast oder umgekehrt, umzusetzen, das heißt zu fokussieren oder kollimieren.

Ein derartiges Ausführungsbeispiel eines strahlungsfeldformenden Elements 42 ist im ersten Ausführungsbeispiel ein vom Strahlungsfeld durchsetztes Element, welches aus einer Linse oder einem Linsensystem gebildet sein kann.

Die erste Umlenkeinheit 44 umfaßt ein inneres Umlenkprisma 50 mit einer ersten reflektierenden Fläche 52 und einer zweiten reflektierenden Fläche 54 die keilförmig zueinander verlaufen und voneinander weg weisen, das heißt, einander abgewandt sind. Ferner umfaßt die erste Umlenkeinheit 44 zwei äußere Umlenkprismen 56 und 58 die jeweils V-förmig zueinander verlaufende, einander zugewandte reflektierende Flächen 60 und 62 bzw. 64 und 66 aufweisen.

Vorzugsweise verlaufen die reflektierenden Flächen 60 und 66 parallel zu den reflektierenden Flächen 52 und 54 des inneren Umlenkprismas 50 und sind diesen zugewandt angeordnet, so daß die von einer Reflektorfläche reflektierte Streuung jeweils auf die dieser zugewandte Reflektorfläche auftrifft.

Ferner sind die Reflektorflächen 62 und 64 im Winkel von 90° relativ zu den Reflektorflächen 60 bzw. 66 und somit auch zueinander im Winkel von 90° angeordnet. Dabei wird von den Reflektorflächen 62 und 64 die Strahlung jeweils von einer dieser Reflektorflächen zur anderen reflektiert, sofern diese Strahlung von der zugeordneten Reflektorfläche 62 bzw. 66 kommt.

Desgleichen umfaßt die zweite Umlenkeinheit 46 ein inneres Umlenkprisma 70 mit zwei im Winkel von 90° zueinander verlaufenden und einander abgewandten Reflektorflächen 72 und 74.

Ferner umfaßt die zweite Umlenkeinheit 46 zwei äußere Umlenkprismen 76 und 78 mit jeweils V-förmig zueinander verlaufenden sowie einander zugewandte Reflektorflächen 80 und 82 bzw. 84 und 86, wobei die Reflektorfläche 80 parallel zur Reflektorfläche 72 und die Reflektorfläche 86 parallel zur Reflektorfläche 74 verläuft und die jeweils zueinander parallel verlaufenden Reflektorflächen einander zugewandt sind.

Ferner verlaufen die Reflektorflächen 82 und 84 im Winkel von 90° zu den Reflektorflächen 80 und 86 und außerdem im Winkel von 90° relativ zueinander und sind ebenfalls so ausgerichtet, daß die eine Reflektorfläche 82, 84 Strahlung zur anderen Reflektorfläche 84, 82 reflektiert, sofern diese Strahlung von der entsprechenden Reflektorfläche 80 bzw. 86 der zugehörigen äußeren Umlenkeinheit 76 bzw. 78 kommt.

Insgesamt verlaufen sämtliche Reflektorflächen 52, 54, 60, 62, 64, 66 der ersten Umlenkeinheit 44 senkrecht zu einer Längssymmetrieebene 90 und sämtliche Reflektorflächen 72, 74, 80, 82, 84, 86 der zweiten Umlenkeinheit 46 senkrecht zu einer Längssymmetrieebene 92, die mit der ersten Symmetrieebene 90 einen Winkel α einschließt, der, wie später im einzelnen erläutert, von der Zahl der kollimierten Äste des Verstärkerstrahlungsfeldes 40 abhängt und 360° geteilt durch die Zahl der kollimierten Äste beträgt.

Ferner verlaufen die Längssymmetrieebenen 90 und 92 im Abstand von einer Mittelachse 94, welche den Festkörper 10 schneidet und symmetrisch zu den kollimierten Ästen des Verstärkerstrahlungsfeldes 40 verläuft.

Die Reflektorflächen 52 und 54 des inneren Umlenkprismas 50 liegen dabei spiegelsymmetrisch zu einer ersten Umlenksymmetrieebene 96 der ersten Umlenkeinheit 44 und die Reflektorflächen 72 und 74 symmetrisch zu einer zweiten Umlenksymmetrieebene 98 der zweiten Umlenkeinheit 46, wobei diese Umlenksymmetrieebenen 96 und 98 durch die Mittelachse 94 hindurchverlaufen und sich in dieser schneiden. Dabei schließen die Umlenksymmetrieebenen 96 und 98 ebenfalls den Winkel α zwischen sich ein.

Ferner sind die Reflektorflächen 60 und 66 sowie 62 und 64 der äußeren Umlenkprismen 56 und 58 symmetrisch zur ersten Umlenksymmetrieebene 96 angeordnet, so daß alle diese Reflektorflächen in einem Winkel von 45° zur ersten Umlenksymmetrieebene 96 verlaufen.

Desgleichen sind die Reflektorflächen 80 und 86 sowie 82 und 84 der äußeren Umlenkprismen 76 und 78 der zweiten Umlenkeinheit 46 symmetrisch zur zweiten Umlenksymmetrieebene 98 angeordnet und verlaufen daher ebenfalls alle in einem Winkel von 45° zu dieser.

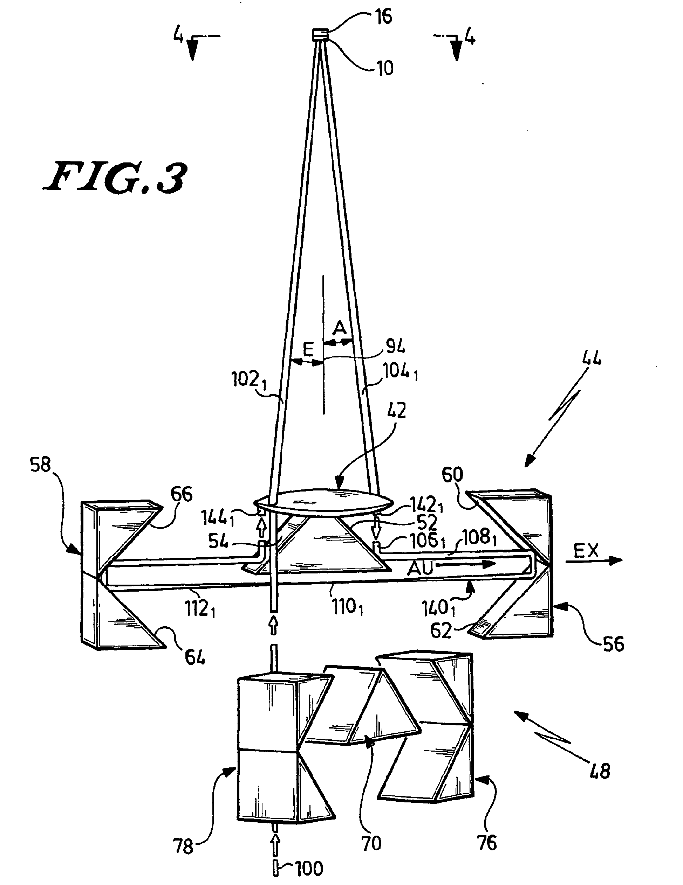

Der Aufbau des Verstärkerstrahlungsfeldes 40 mit der erfindungsgemäßen Strahlungsfeldführungsoptik 48 ist nun im einzelnen in den Fig. 3 bis 10 dargestellt.

Ausgangspunkt der Ausbildung des Verstärkerstrahlungsfeldes 40 ist ein divergenter Ast 100, welcher vorzugsweise parallel zur Mittelachse 94 verläuft und durch das strahlungsfeldformende Element 42 in einen ersten kollimierten einfallenden Ast 102₁ umgesetzt wird, welcher in den Festkörper 10 eintritt, und zwar in einem Winkel E zur Mittelachse 94 (Fig. 3).

Nach Durchsetzen des Festkörpers 10 erfolgt eine Reflexion am Reflektor 16, so daß ein erster kollimierter, aus dem Festkörper 10 ausfallender Ast 104₁ entsteht, der im Winkel A zur Mittelachse 94 verläuft, wobei der Winkel A dem Winkel E entspricht.

Dieser erste kollimierte ausfallende Ast 104₁ trifft auf das strahlungsfeldformende Element 42 und wird von diesem in einen ersten zwischenfokussierten Ast 106₁ umgeformt, welcher einen fokussierten Teilast 108₁ umfaßt, der seinerseits mit einem parallel zur Mittelachse 94 verlaufenden Abschnitt einer sogenannten ersten Eingangsast 142₁ bildet, und auf die Reflektorfläche 52 auftrifft, von dieser senkrecht zur Umlenksymmetrieebene 96 auf die Reflektorfläche 60 reflektiert wird, von dieser auf die Reflektorfläche 62 reflektiert wird und sich wiederum senkrecht zur ersten Umlenksymmetrieebene 96 in Richtung der Reflektorfläche 64 ausbreitet (Fig. 3).

Vorzugsweise ist dabei das strahlungsfeldformende Element 42 so ausgebildet, daß ein Zwischenfokus 110₁ des fokussierten Teilastes 108₁ des zwischenfokussierten Astes 106₁ in der Umlenksymmetrieebene 96 liegt und sich somit ausgehend von dem Fokus 110₁ ausgehend von der Umlenksymmetrieebene 96, und zwar senkrecht zu dieser ein erster divergenter Teilast 112₁ ausbreitet, auf die Reflektorfläche 64 auftrifft und von dieser zur Reflektorfläche 66 und von dieser dann wiederum zur Reflektorfläche 54 reflektiert wird, die diesen divergenten Teilast 112₁ des ersten zwischenfokussierten Astes 106₁ zum Strahlungsfeld formenden Element 42 umlenkt und zwar so, daß er einen parallel zur Mittelachse 94 ausgerichteten Abschnitt bildet, der einen sogenannten ersten Ausgangsast 144, darstellt und mit diesem auf das strahlungsfeldformende Element 42 auftrifft.

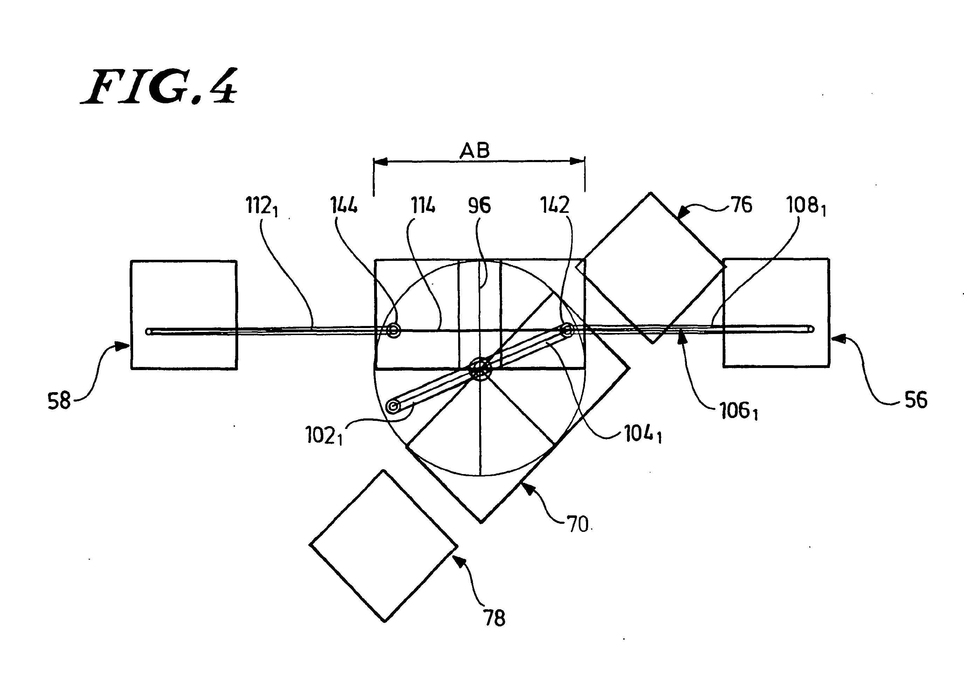

Insgesamt verläuft der zwischenfokussierte Ast 106₁ in einer Ebene 114 parallel zur jedoch im Abstand von der Längssymmetrieebene 90 und symmetrisch zur Umlenksymmetrieebene 96 durch die erste Umlenkeinheit 44 (Fig. 4).

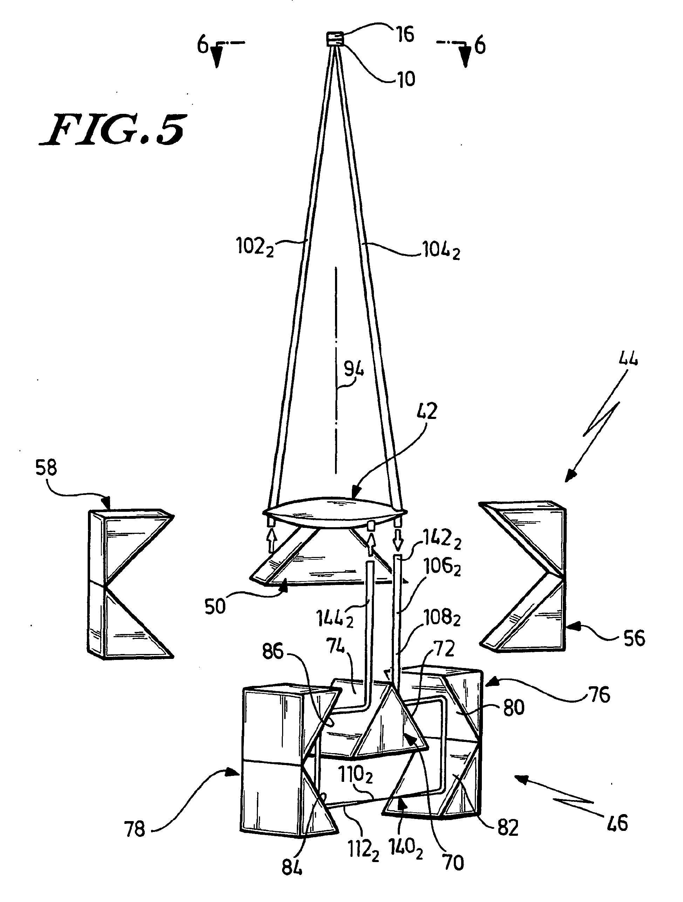

Das strahlungsfeldformende Element 42 bildet nun aus dem ersten zwischenfokussierten Ast 106₁ einen zweiten kollimierten einfallenden Ast 102₂, welcher auf den Festkörper 10 auftrifft, diesen durchsetzt, so daß durch den Reflektor 16 ein zweiter kollimierter ausfallender Ast 104₂ gebildet wird (Fig. 5).

Dieser kollimierte ausfallende Ast 104₂ trifft auf das strahlungsfeldformende Element 42 und wird von diesem in einen zweiten zwischenfokussierten Ast 106₂ umgeformt, welcher mit seinem zweiten Eingangsast 142₂ parallel zur Mittelachse 94 verläuft und dabei auf die Reflexionsfläche 72 als fokussierter Teilast 108₂ auftrifft, der durch die Reflexionsfläche 72, durch die Reflexionsfläche 80 und durch die Reflexionsfläche 82 reflektiert wird und einen Zwischenfokus 110₂ bildet, der in der Umlenksymmetrieebene 98 der zweiten Umlenkeinheit 46 liegt. Ausgehend vom Zwischenfokus 110₂ breitet sich der zwischenfokussierte Ast 106₂ als divergenter Teilast 112₂ in Richtung der Reflexionsfläche 84 aus, wird von dieser zur Reflexionsfläche 86 reflektiert und von dieser dann zur Reflexionsfläche 74, so daß der divergente Teilast 112₂ wiederum als zweiter Ausgangsast 144₂ parallel zur Mittelachse 94 auf das strahlformende Element 42 auftrifft.

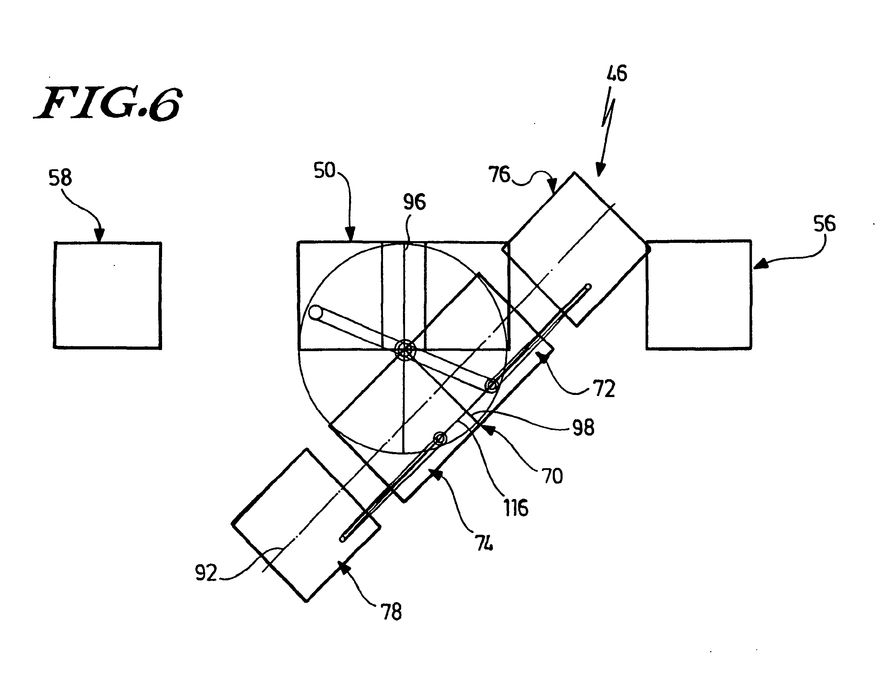

Dabei verläuft der zweite zwischenfokussierte Ast insgesamt in einer Ebene 116, die parallel zur jedoch im Abstand von der Längssymmetrieebene 92 verläuft durch die zweite Umlenkeinheit 46 und außerdem symmetrisch zur Umlenksymmetrieebene 98 (Fig. 6) ist.

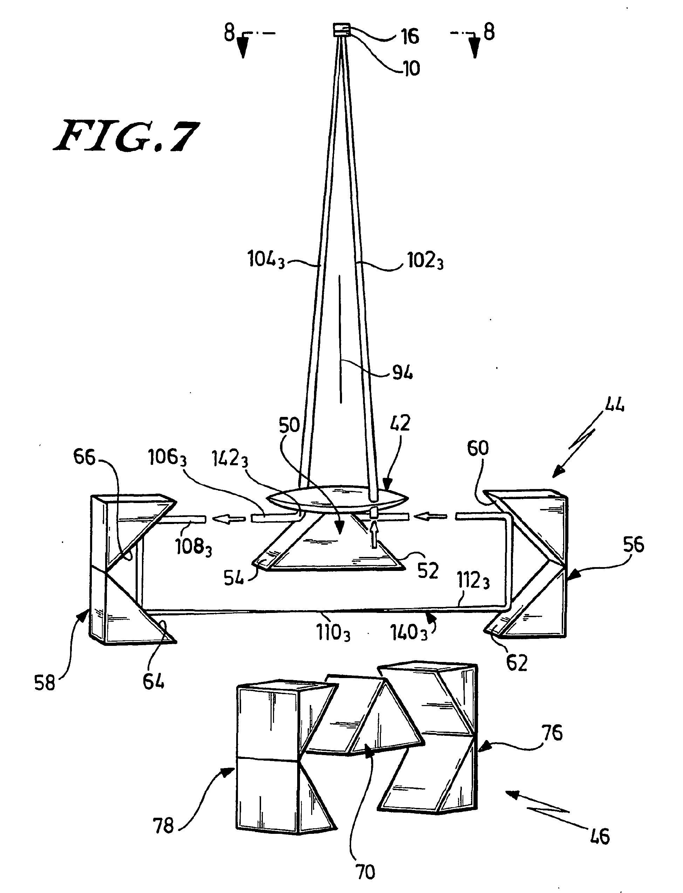

Aus diesem zweiten Ausgangsast 144₂ formt das strahlungsfeldformende Element 42 wiederum einen dritten kollimierten einfallenden Ast 102₃, welcher in den Festkörper 10 einfällt und aus welchem sich durch Reflexion am Reflektor 16 der dritte kollimierte ausfallende Ast 104₃ bildet, der wiederum auf das strahlungsfeldformende Element 42 auftrifft. Das strahlungsfeldformende Element 42 formt aus dem dritten kollimierten ausfallenden Ast 104₃ einen dritten zwischenfokussierten Ast 106₃, welcher als dritter Eingangsast 142₃ und als fokussierter Teilast 108₃ auf die Reflektorfläche 54 auftrifft, von dieser zur Reflektorfläche 66 und von der Reflektorfläche 66 zur Reflektorfläche 64 reflektiert wird und sich bis zu einem Zwischenfokus 110₃ ausbreitet, welcher wiederum in der Umlenksymmetrieebene 96 liegt, wie in Fig. 7 dargestellt.

Ausgehend von dem Zwischenfokus 110₃ breitet sich dann ein divergenter Teilast 110₃ in Richtung der Reflektorfläche 62 und von dieser in Richtung der Reflektorfläche 60 aus, welcher dann auf die Reflektorfläche 52 trifft und von dieser wiederum parallel zur Mittelachse 94 reflektiert wird und den dritten Ausgangsast 144₃ bildet.

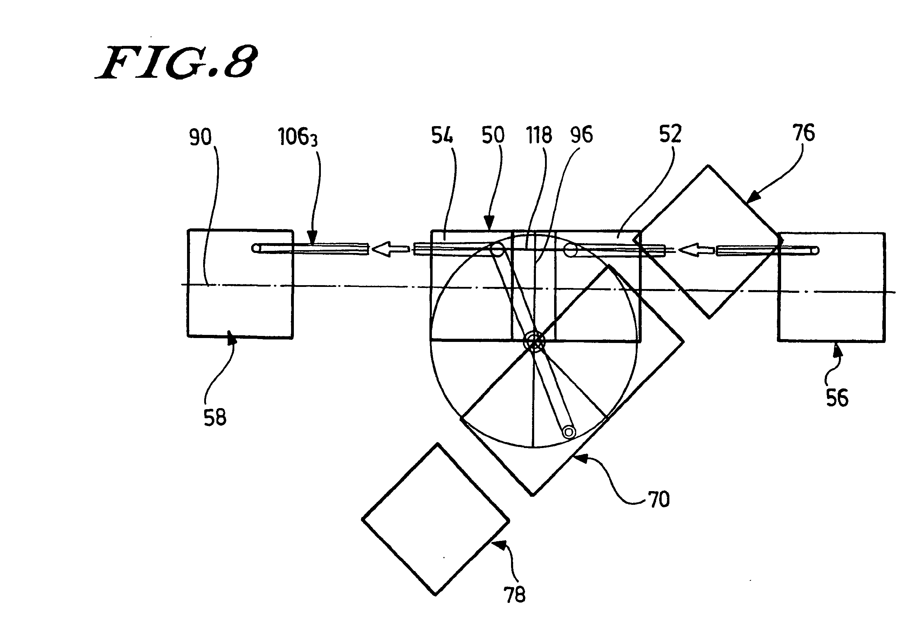

Auch der dritte zwischenfokussierte Ast 106₃ verläuft in einer Ebene 118, welche parallel zur jedoch im Abstand von der Längssymmetrieebene 90 und somit auch parallel zur Ebene 114 liegt, jedoch nicht mit der Ebene 114 deckungsgleich ist (Fig. 8).

Ferner verläuft der dritte zwischenfokussierte Ast 106₃ ebenfalls symmetrisch zur Umlenksymmetrieebene 96.

Vorzugsweise liegen die Ebenen 114 und 118 symmetrisch zur Längssymmetrieebene 90.

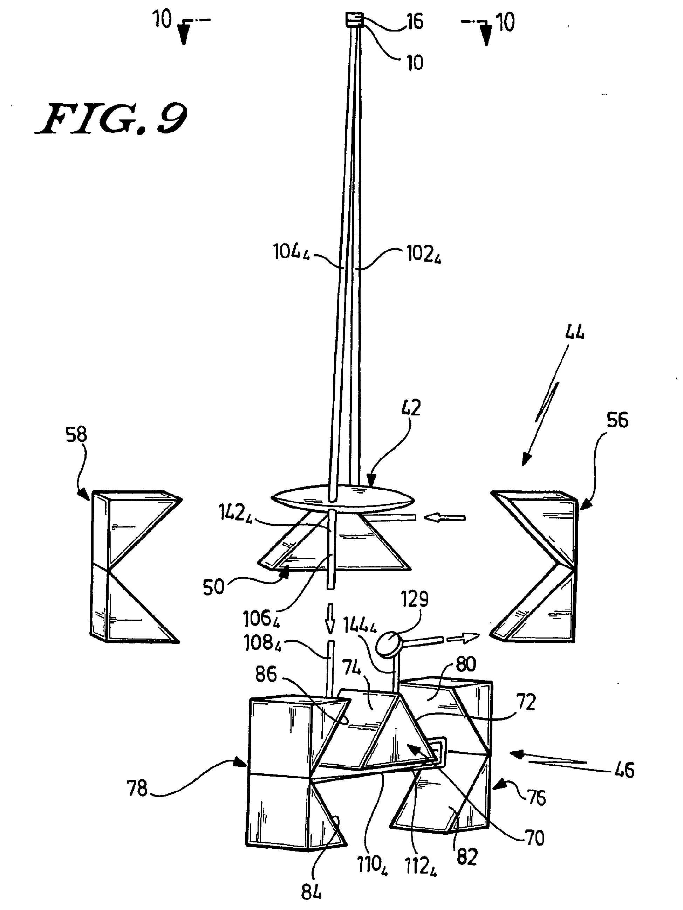

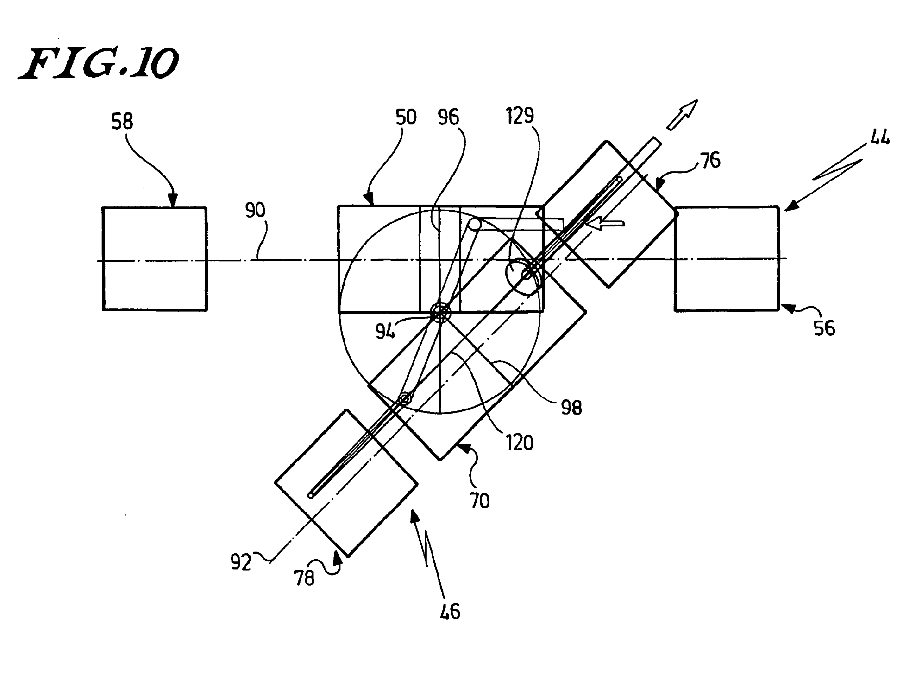

Aus dem dritten zwischenfokussierten Ast 106₃ formt das Strahlungsfeld formende Element 42, wie in Fig. 9 dargestellt, den vierten kollimierten einfallenden Ast 102₄, welcher in den Festkörper 10 einfällt, und aus welchem durch den Reflektor 16 der vierte kollimierte ausfallende Ast 104₄ gebildet wird, der wiederum auf das strahlungsfeldformende Element 42 auftrifft und aus welchem das strahlungsfeldformende Element 42 einen vierten zwischenfokussierten Ast 106₄ bildet, welcher, wie in Fig. 9 und 10 dargestellt, zunächst in Form eines fokussierten Teilastes 108₄ auf die Reflektorfläche 74 auftrifft, von dieser zur Reflektorfläche 86 reflektiert wird und dann zur Reflektorfläche 84, wobei ein Fokus 110₄ wiederum in der Umlenksymmetrieebene 98 liegt.

Ausgehend von dem Fokus 110₄ bildet sich ein divergenter Ast 112₄, welcher auf die Reflektorfläche 82, die Reflektorfläche 80 und dann die Reflektorfläche 72 auftrifft. Damit verläuft insgesamt der vierte zwischenfokussierte Ast 106₄ ebenfalls in einer Ebene 120, welche parallel zur Längssymmetrieebene 92 und somit auch parallel zur Ebene 116 verläuft, allerdings mit der Ebene 116 nicht zusammenfällt (Fig. 10).

Vorzugsweise liegen die Ebenen 116 und 120 symmetrisch zur Längssymmetrieebene 92 (Fig. 2).

Der vierte zwischenfokussierte Ast 106₄ verläuft ausgehend von seinem vierten Eingangsast 142₄ ebenfalls im wesentlichen symmetrisch zur Umlenksymmetrieebene 98, allerdings abweichend von einer vollständigen Symmetrie nicht bis zum strahlungsfeldformenden Element 42, sondern trifft mit dem divergenten Teilast 112₄ mit seinem parallel zur Mittelachse 94 verlaufenden vierten Ausgangsast 144₄ auf einen Auskoppelspiegel 129, der den divergenten Ast 112₄ quer zur Mittelachse 94 umlenkt und aus der Strahlungsfeldführungsoptik 48 als ausgekoppelten Ast austreten läßt, wie in Fig. 9 und 10 dargestellt, wobei dieser auch beispielsweise als divergenter Ast in ein weiteres Laserverstärkersystem eintreten kann. Mit Erreichen des Auskoppelspiegels 129 ist ein Durchlauf des Verstärkerstrahlungsfeldes 40 durch die Strahlungsfeldführungsoptik 48 beendet.

Insgesamt liegen, wie in Fig. 2 dargestellt, alle kollimierten Äste 102 und 104 des Verstärkerstrahlungsfeldes 40 in jeweils einzelnen Raumsegmenten 130₁ bis 130₈ um die Mittelachse 94 herum, wobei alle Raumsegmente 130 über den gleichen Winkelabstand um die Mittelachse 94 herum erstrecken.

Ferner wirken die sich in den Raumsegmenten 130₂ bis 130₄ ausbreitenden kollimierten Äste mit der zweiten Umlenkeinheit 46 zusammen, während die sich in den Raumsegmenten 130₅ bis 130₈ ausbreitenden kollimierten Äste mit der ersten Umlenkeinheit 44 zusammenwirken.

Sowohl die erste Umlenkeinheit 44 als auch die zweite Umlenkeinheit 46 führen bei jedem zwischenfokussierten Ast 106 zur Bildung einer Schleife 140, deren Eingangsast 142 und deren Ausgangsast 144 einen Abstand AB aufweisen, während die Schleife 140 in mindestens einer Expansionsrichtung EX eine Ausdehnung AU aufweist, welche größer ist als der Abstand AB, vorzugsweise mindestens das Doppelte des Abstandes AB beträgt.

Dadurch wird erreicht, daß die beiderseits des jeweiligen Zwischenfokus 110 des zwischenfokussierten Astes 106 liegenden Spiegelflächen, beispielsweise die Spiegelflächen 62 und 64 oder die Spiegelflächen 82 und 84 einen der Ausdehnung AU der Schleife 140 ungefähr entsprechenden Abstand voneinander aufweisen, wobei der Abstand vorzugsweise die Hälfte der Ausdehnung AU beträgt, so daß die nächstliegend zum jeweiligen Fokus 110 angeordneten Reflexionsflächen 62 und 64 bzw. 82 und 84 möglichst weit vom Fokus entfernt sind, um auf den jeweiligen Reflektorflächen 62 und 64 bzw. 82 und 84 einen möglichst großen Strahlquerschnitt und somit möglichst geringe Intensität pro Flächeneinheit des Strahlquerschnitts zu erhalten, so daß eine Beschädigung der Reflektorflächen 62 und 64 bzw. 82 und 84 aufgrund zu großer Intensität pro Flächeneinheit des Strahlquerschnitts vermieden werden kann.

Ferner sind die Umlenkeinheiten 44 und 46 so ausgebildet, daß ausgehend vom strahlungsfeldformenden Element 42 der optische Weg in jeder der Schleifen 140₁ bis 140₃, die jeweils wiederum zum strahlungsfeldformenden Element 42 zurückführen, gleich groß ist, so daß im einfachsten Fall das strahlungsfeldformende Element 42 in allen Raumsegmenten 130₁ bis 130₈ mit der gleichen Brennweite einen der kollimierten Äste 102, 104 in einen der zwischenfokussierten Äste 106 oder umgekehrt umformen kann.

Sollen parasitäre Moden vermieden werden, so werden vorzugsweise einem oder mehreren Zwischenfoki 110 Raumfilter, beispielsweise in Form von Lochblenden, zugeordnet.

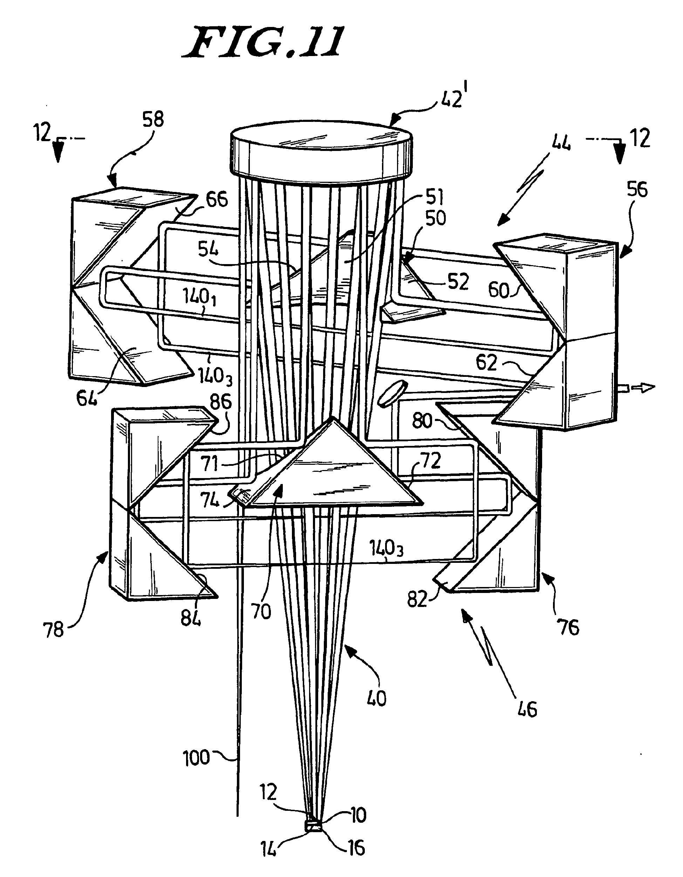

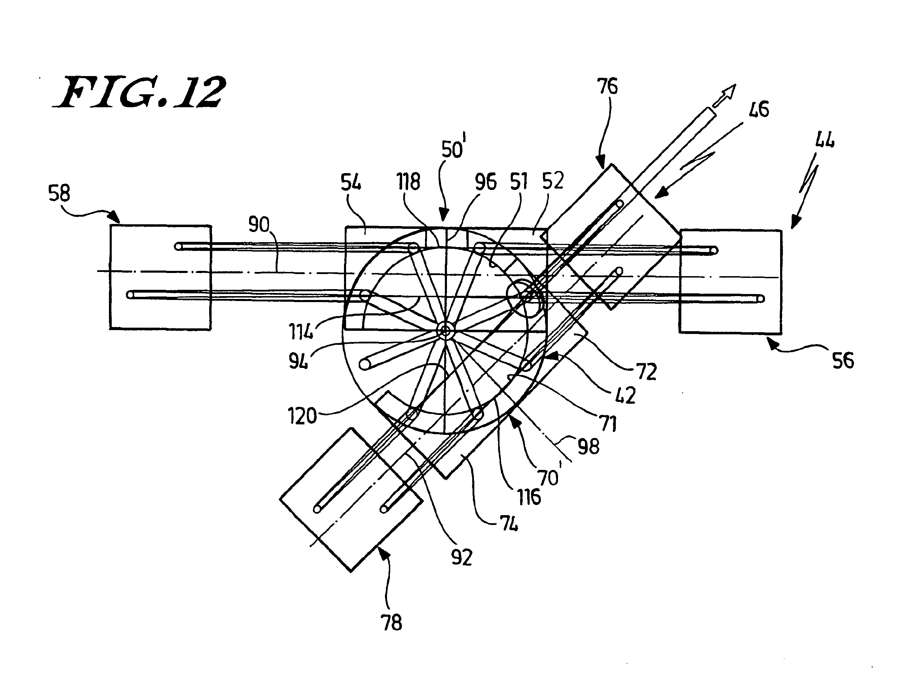

Bei einem zweiten Ausführungsbeispiel eines erfindungsgemäßen Laserverstärkersystems, dargestellt in Fig. 11 und 12 sind diejenigen Elemente, die mit denen des ersten Ausführungsbeispiels identisch sind, mit denselben Bezugszeichen versehen, so daß vollinhaltlich zu den Ausführungen zum ersten Ausführungsbeispiel Bezug genommen werden kann.

Insbesondere sind die Umlenkeinheiten 44 und 46 relativ zum strahlungsfeldformenden Element 42 in gleicher Weise angeordnet wie beim ersten Ausführungsbeispiel.

Im Gegensatz zum ersten Ausführungsbeispiel wird das strahlungsfeldformende Element 42 nicht von dem Verstärkerstrahlungsfeld durchsetzt, sondern das strahlungsfeldformende Element 42 ist als reflektierendes Element, beispielsweise als Hohlspiegel ausgebildet, welcher entweder im Querschnitt parabolische Reflexionsflächen oder torische Reflexionsflächen aufweisen kann.

Damit liegen die die Umlenkeinheiten durchsetzenden Schleifen 140₁ bis 140₃ auf derselben Seite des strahlungsfeldformenden Elements 42 wie die einzelnen kollimierten Äste 102 und 104.

Dies hat zur Konsequenz, daß die inneren Umlenkprismen 50' und 70' mit einer bezüglich der Mittelachse 94 kreisförmigen Ausnehmung 51 bzw. 71' versehen sind, die ein ungehindertes Hindurchtreten der kollimierten Äste 102, 104 erlauben, wobei die Ausnehmungen 51 und 71 noch so dimensioniert sind, daß stets eine vollständige Reflexion der sich parallel zur Mittelachse 94 ausbreitenden Abschnitte der zwischenfokussierten Äste 106 an den Reflexionsflächen 52 und 54 bzw. 72 und 74 erfolgt.

Das heißt, daß der Radius der Ausnehmungen 51 und 71 bezogen auf die Mittelachse kleiner ist als der Abstand der parallel zur Mittelachse 94 verlaufenden Abschnitte der zwischenfokussierten Äste 106 von der Mittelachse 94.

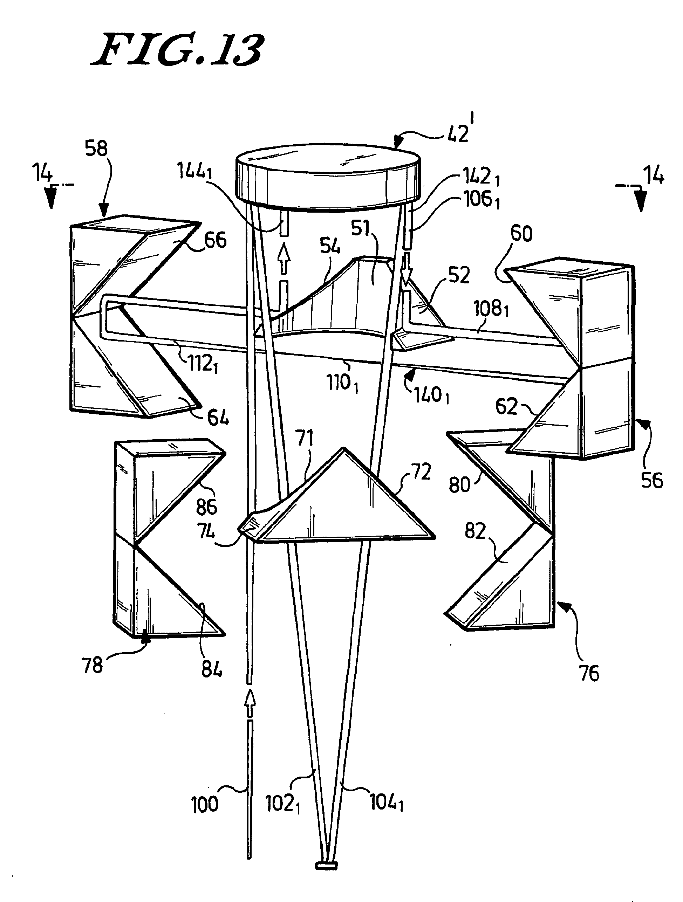

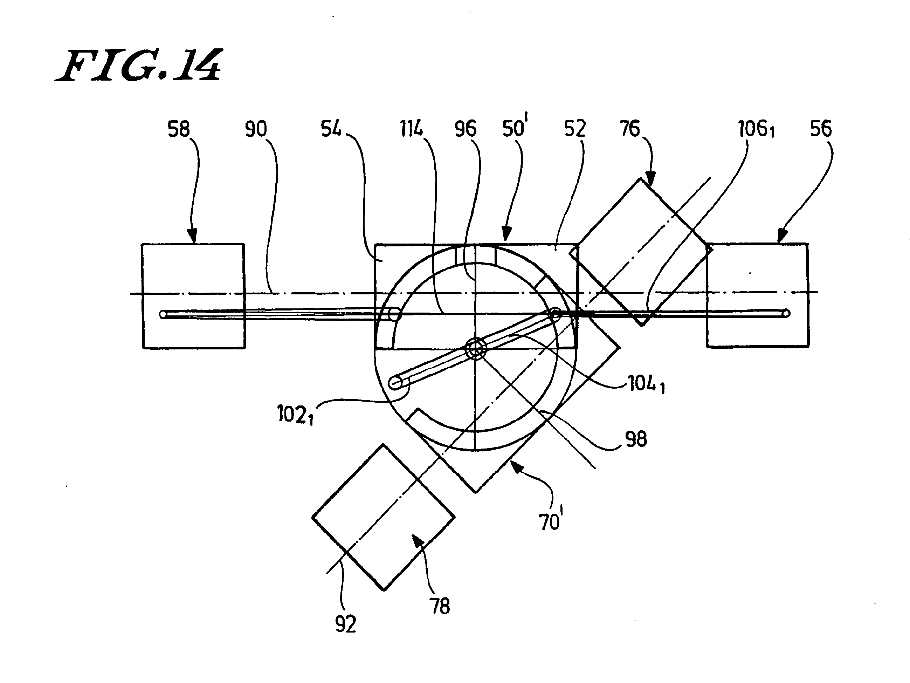

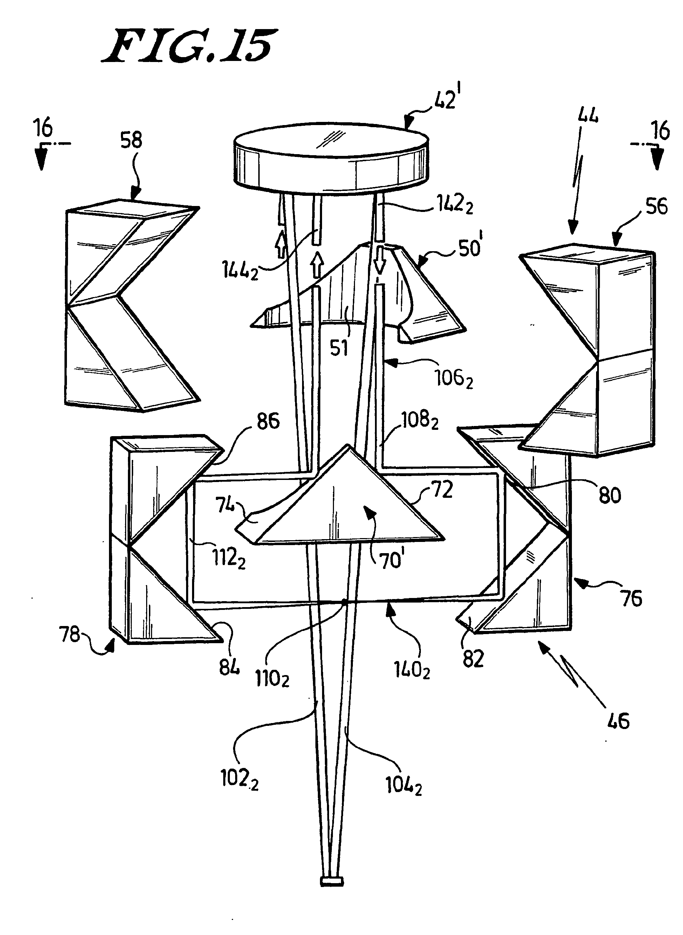

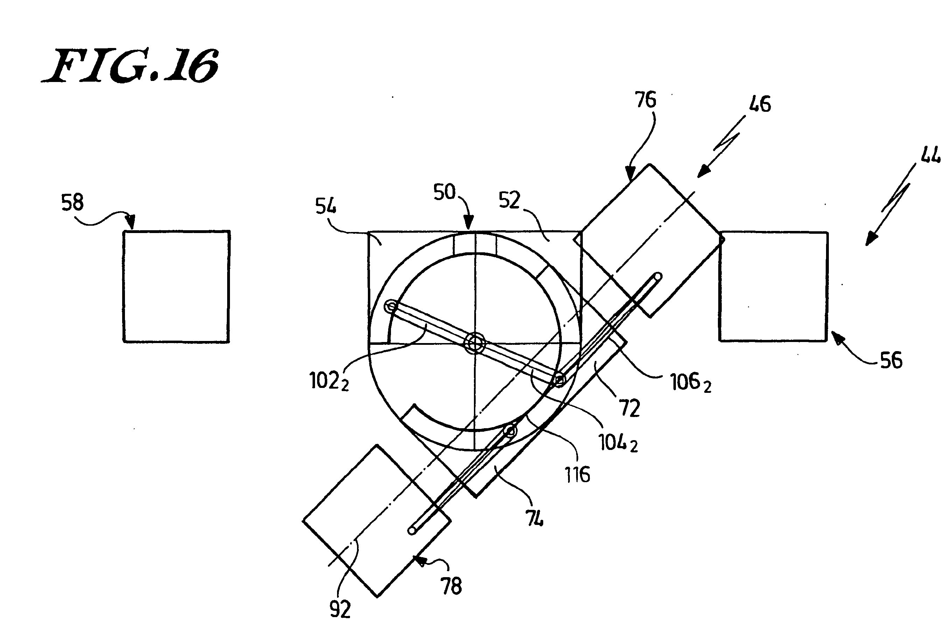

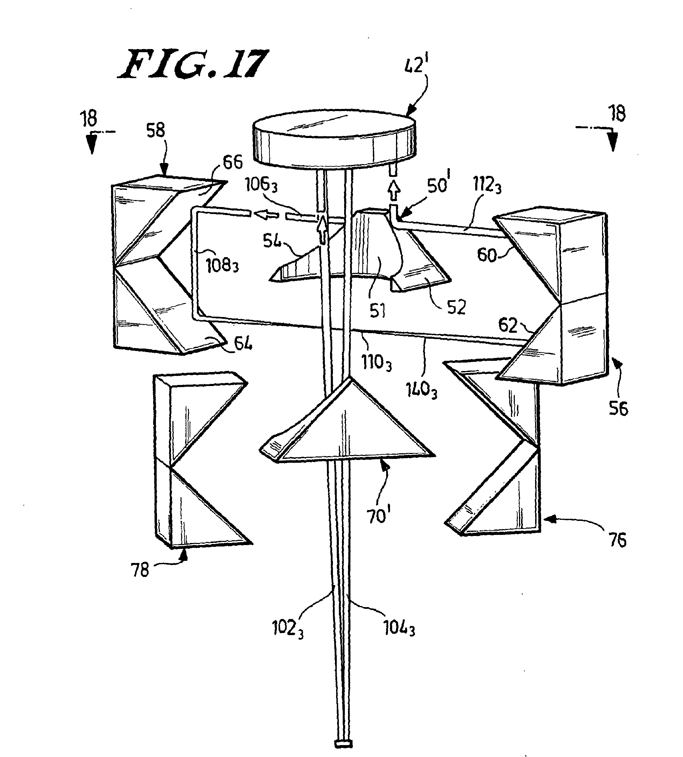

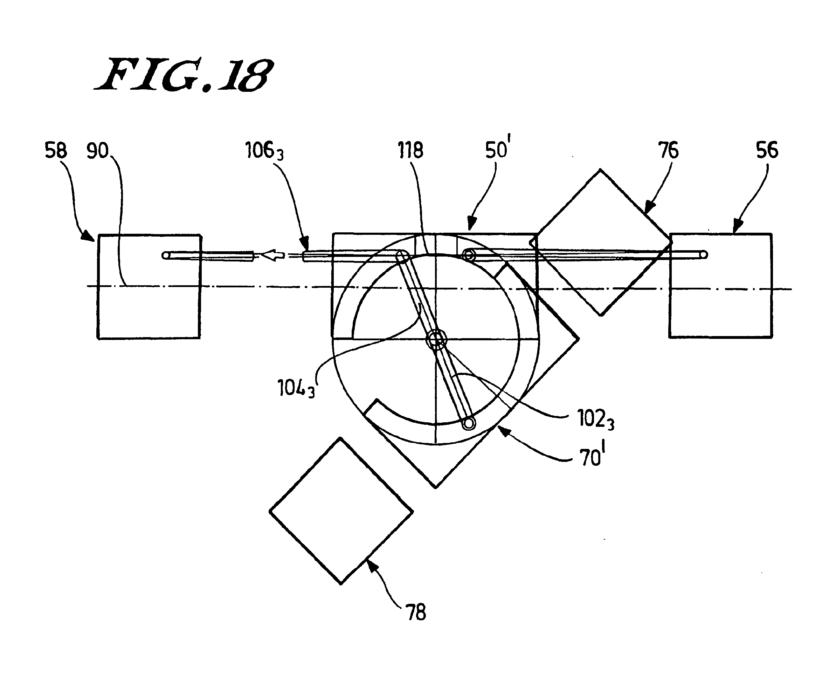

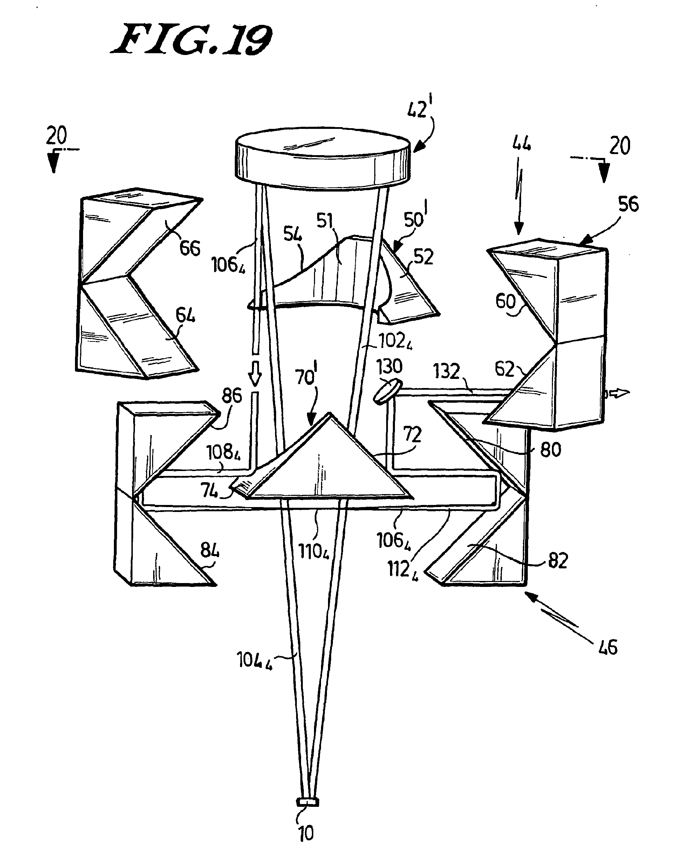

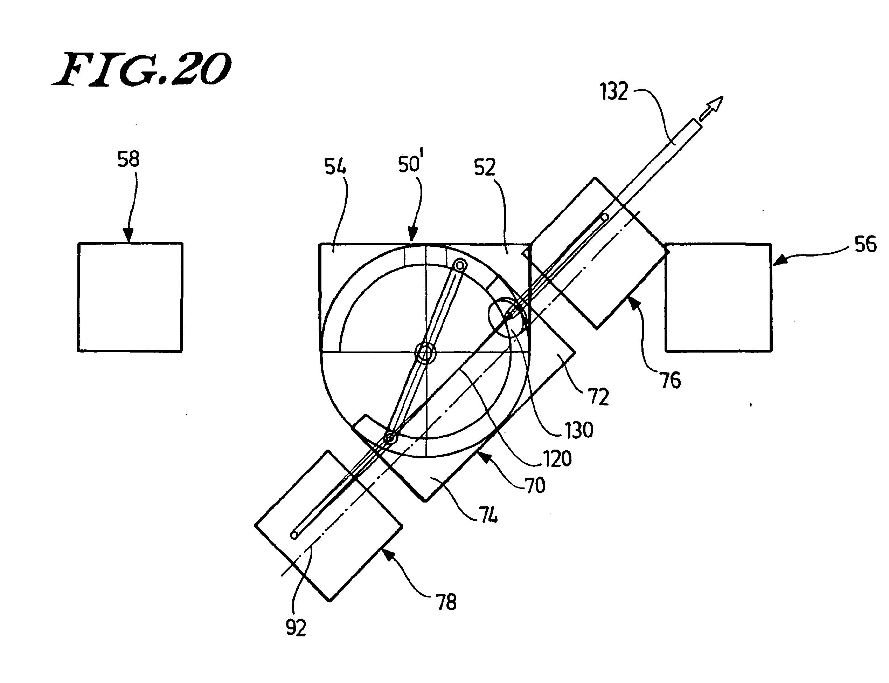

Im übrigen erfolgt der Aufbau des Verstärkerstrahlungsfeldes 40 beim zweiten Ausführungsbeispiel in gleicher Weise wie beim ersten Ausführungsbeispiel, wie sich aus den Fig. 13 bis 20 ergibt.

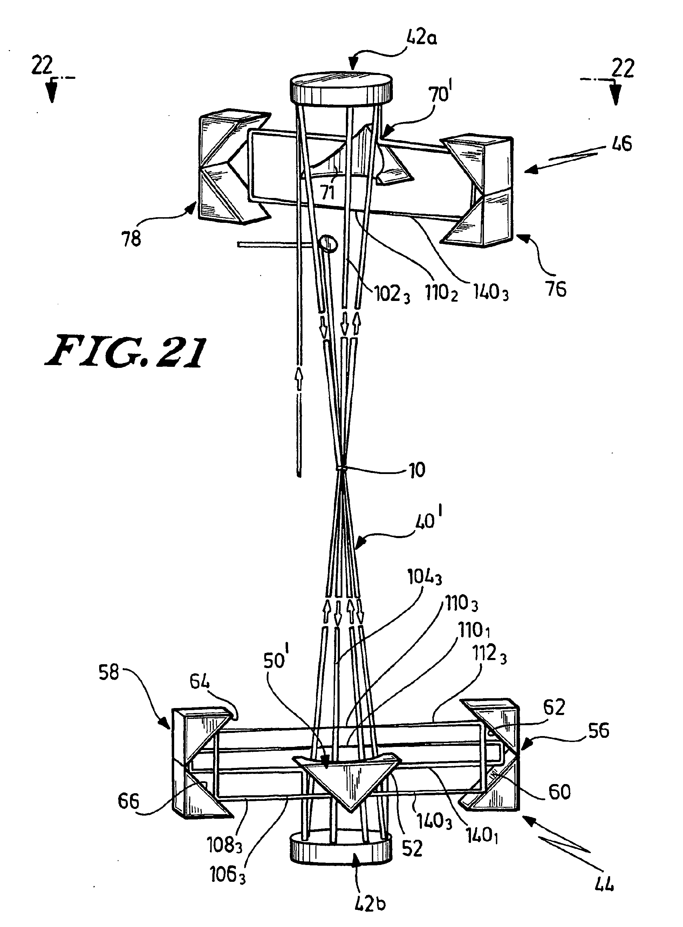

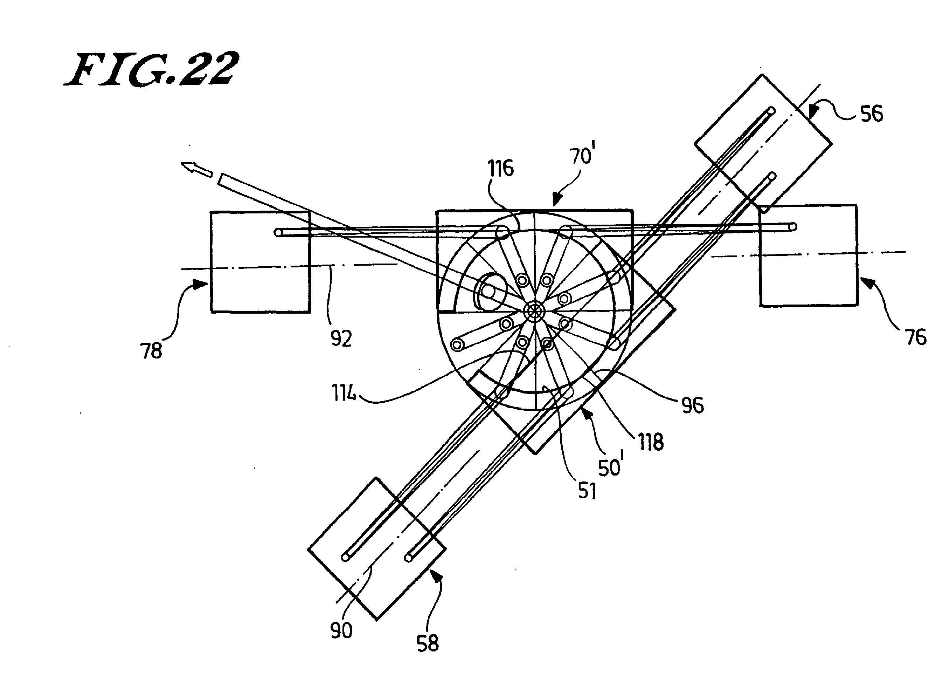

Bei einem dritten Ausführungsbeispiel des erfindungsgemäßen Laserverstärkersystems, dargestellt in Fig. 21 und 22 ist der Festkörper 10 nicht mit einem Reflektor versehen, sondern so in dem Verstärkerstrahlungsfeld 40' angeordnet, daß dieses den Festkörper 10 durchsetzen kann.

Ferner sind in Durchstrahlungsrichtung des Festkörpers 10 beidseitig desselben strahlungsfeldformende Elemente 42a und 42b angeordnet, von denen jedes in der Lage ist, einen kollimierten Ast 102 oder 104 in einen zwischenfokussierten Ast 106 umzusetzen und umgekehrt.

Im einfachsten Fall sind die strahlungsfeldformenden Elemente 42a und 42b als identische Hohlspiegel ausgebildet.

Ferner ist die erste Umlenkeinheit 44 auf einer Seite des Festkörpers 10 angeordnet und dient dazu, diejenigen zwischenfokussierten Äste 106 zu expandieren, die vom strahlungsfeldformenden Element 42b erzeugt werden, während die zweite Umlenkeinheit 46 auf der gegenüberliegenden Seite des Festkörpers 10 angeordnet ist und dazu dient, die vom strahlungsfeldformenden Element 42a erzeugten zwischenfokussierten Äste 106 zu expandieren.

Prinzipiell erfolgt jedoch der Aufbau des Verstärkerstrahlungsfeldes in gleicher Weise wie beim zweiten Ausführungsbeispiel, allerdings insoweit anders, als jeweils eine Durchstrahlung des Festkörpers erfolgt.

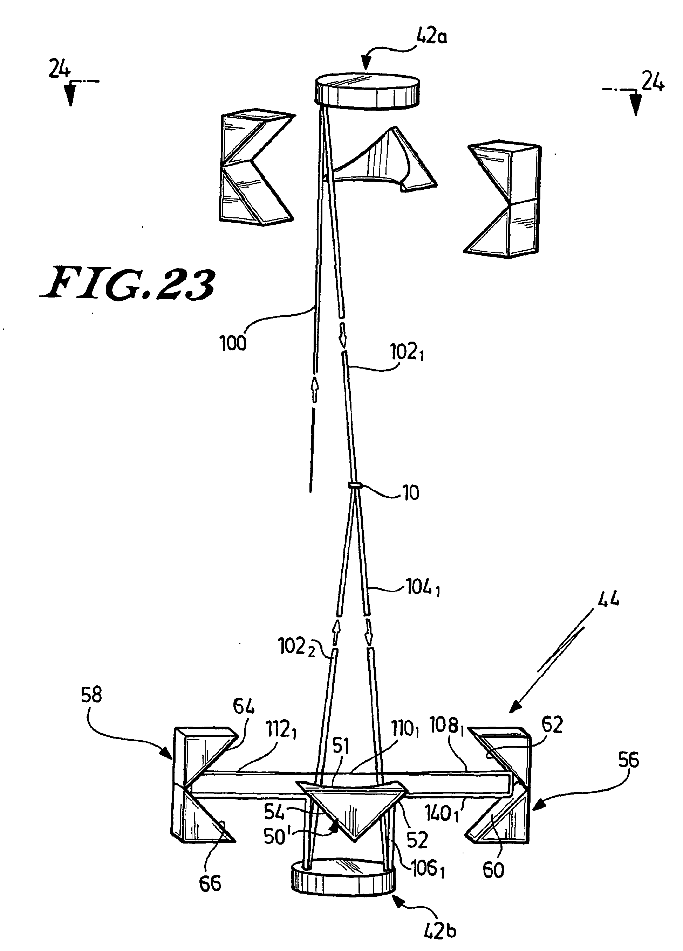

Der Aufbau des Verstärkerstrahlungsfeldes 40' ist im einzelnen in den Fig. 23 bis 28 dargestellt.

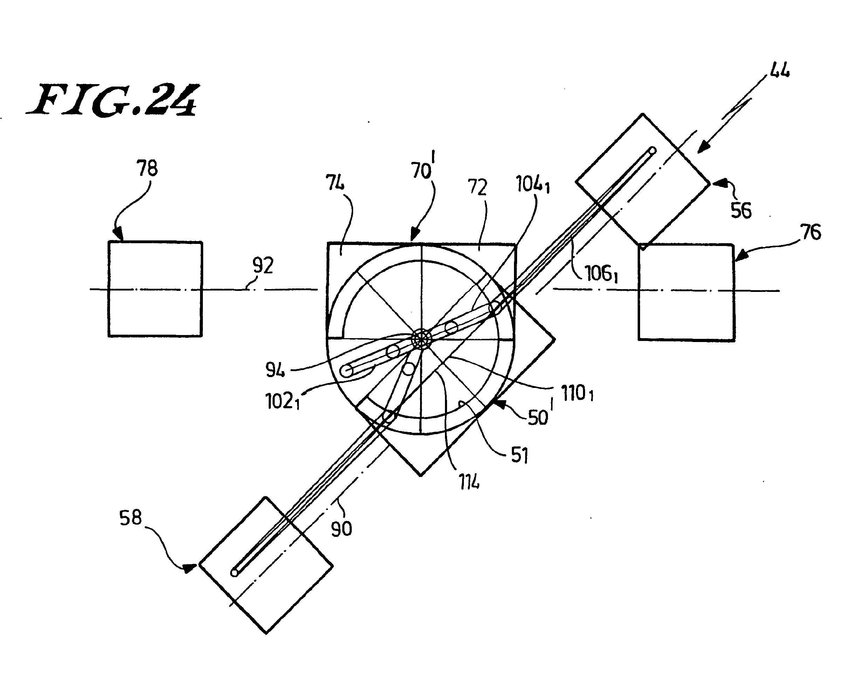

So erfolgt beispielsweise aus dem einfallenden Ast 100 mittels des strahlungsfeldformenden Elements 42a die Bildung des ersten kollimierten einfallenden Astes 102₁, welcher in den Festkörper 10 einfällt und diesen durchsetzt. Der aus dem Festkörper 10 in gleicher Richtung wie der einfallende Ast 102₁ sich ausbreitende erste kollimierte ausfallende Ast 104₁ trifft dabei auf das strahlungsfeldformende Element 42b, welches den ersten zwischenfokussierten Ast 106₁ bildet, der auf die reflektierende Fläche 52 des inneren Umlenkprismas 50' auftrifft, von dieser zur reflektierenden Fläche 60 und dann zur reflektierenden Fläche 62 der ersten Umlenkeinheit 44 des äußeren Umlenkprismas 56 umgelenkt wird, wobei der fokussierte Teilast 108₁ den Fokus 110₁ bildet, von welchem sich ausgehend der divergierende Teilast 112₁ des zwischenfokussierten Astes 106₁ in Richtung des äußeren Umlenkprismas 58 der ersten Umlenkeinheit 44 ausbreitet und dann von den reflektierenden Flächen 64 und 66 so reflektiert wird, daß dieser wieder auf die reflektierende Fläche 54 auftrifft, die den zwischenfokussierten Ast 106₁ wiederum in Richtung des strahlungsfeldformenden Elements 42b umlenkt, das seinerseits wiederum durch Reflexion den zweiten kollimierten einfallenden Ast 102₂ bildet (Fig. 23, 24).

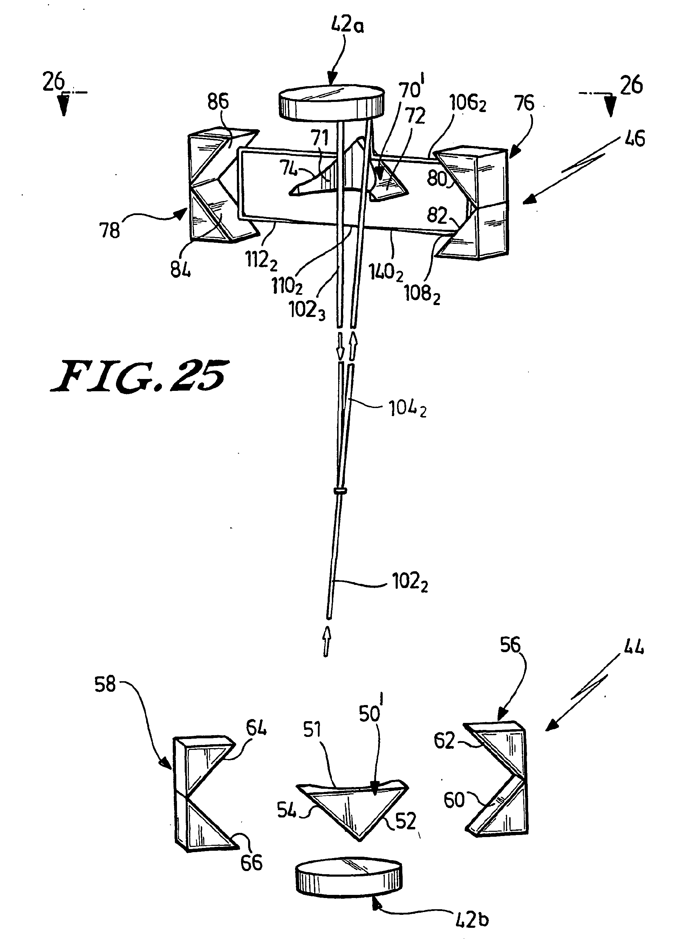

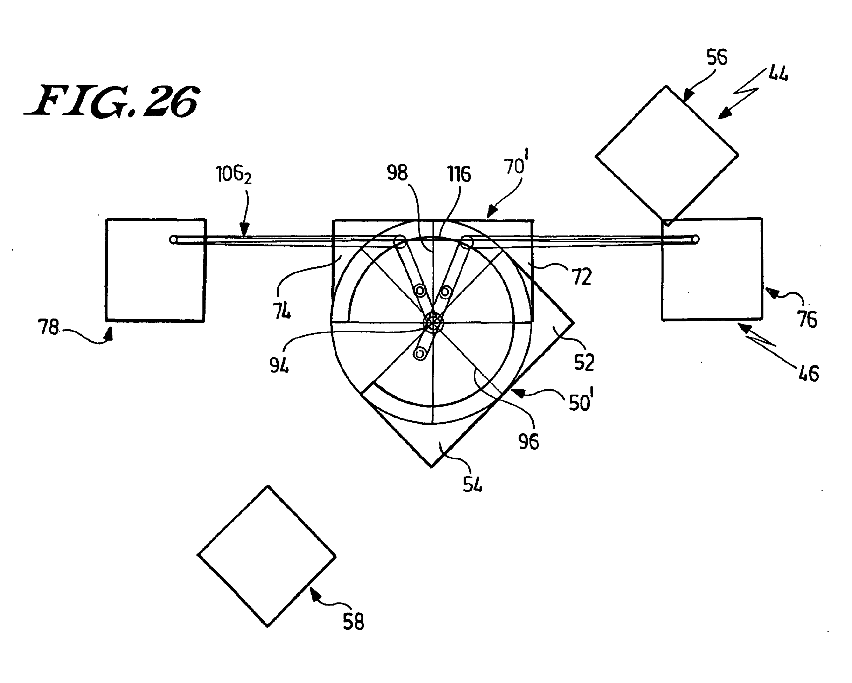

Nach Transmission durch den Festkörper 10 bildet sich, wie in Fig. 25, 26 dargestellt, der zweite kollimierte ausfallende Ast 104₂, welcher auf das strahlungsfeldformende Element 42a trifft, das seinerseits wiederum den zweiten zwischenkollimierten Ast 106₂ bildet, welcher auf die reflektierende Fläche 72 des inneren Umlenkprismas 70 der zweiten Umlenkeinheit 46 trifft, von dieser zur reflektierenden Fläche 80 und dann zur reflektierenden Fläche 82 des äußeren Umlenkprismas 76 reflektiert wird, so daß der fokussierte Teilast 108₂ schließlich den Zwischenfokus 110₂ bildet, von welchem sich ausgehend der divergente Teilast 112₂ in Richtung des äußeren Umlenkprismas 78 ausbreitet, von den Reflexionsflächen 84 und 86 reflektiert wird und schließlich auf die Reflexionsfläche 74 des inneren Umlenkprismas 70' auftrifft, um von dieser in Richtung des Strahlungsfeld formenden Elements 42a umgelenkt zu werden.

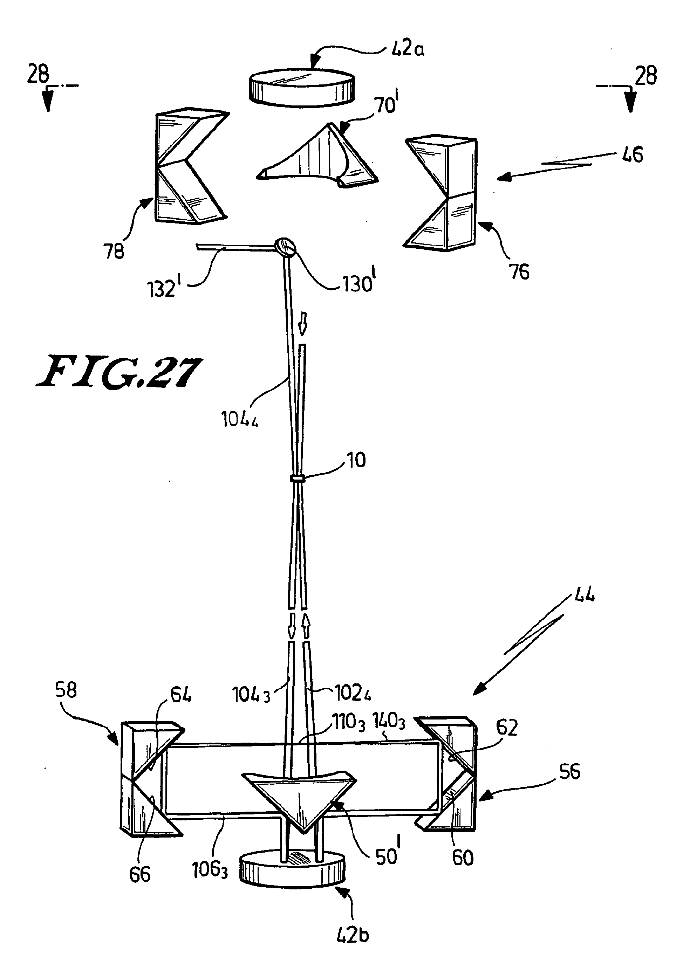

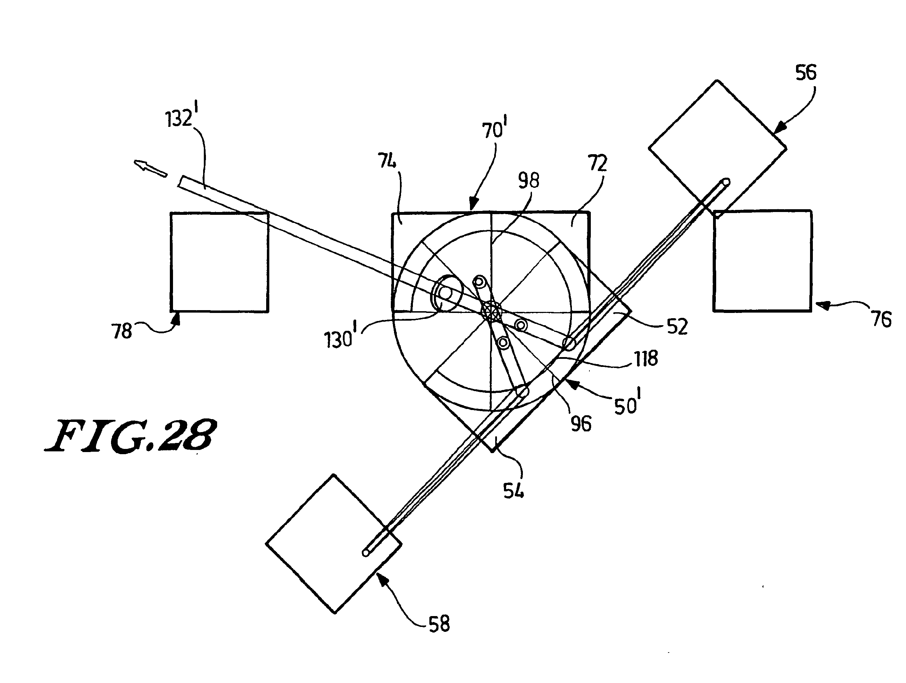

Das innere Umlenkprisma 70' erzeugt den dritten einfallenden Ast 102₃, aus dem wiederum der dritte kollimierte ausfallende Ast 104₃ entsteht, der auf das strahlungsfeldformende Element 42b auftrifft, das wiederum den dritten zwischenfokussierten Ast 106₃ erzeugt, der mit dem fokussierten Teilast 108₃ nach Reflexion an der Reflexionsfläche 66 und der Reflexionsfläche 64 den Zwischenfokus 110₃ erzeugt, so daß der wiederum entstehende divergente Teilast 112₃ auf die äußere Umlenkeinheit 56 trifft und nach Reflexion an der Reflexionsfläche 62 und der Reflexionsfläche 60 wiederum auf die Reflexionsfläche 52 des inneren Umlenkprismas 50' auftrifft, welches den dritten zwischenfokussierten Ast 106₃ auf das strahlungsfeldformende Element 42b umlenkt, das aus diesem dritten fokussierten Ast, wie in Fig. 27, 28 dargestellt, den vierten kollimierten einfallenden Ast 102₄ erzeugt, welcher nach Durchsetzen des Festkörpers 10 zum vierten kollimierten ausfallenden Ast 104₄ wird. Dieser trifft nun nicht mehr auf das Strahlungsfeld formende Element 42a, sondern kann unmittelbar durch einen Auskoppelspiegel 130' umgelenkt werden und den ausgekoppelten Strahl 132' bilden.

Es wäre aber auch möglich, den vierten ausfallenden Ast 104₄ auf das strahlungsfeldformende Element 42a auftreffen zu lassen und nach Bildung eines vierten zwischenfokussierten Astes 106₄ auszukoppeln.

Auch beim dritten Ausführungsbeispiel erfolgt in den Umlenkeinheiten 44 und 46 eine Führung der zwischenfokussierten Äste 106 in Schleifen 140und eine Expansion derselben relativ zur jeweiligen Umlenksymmetrieebene 96 bzw. 98 in gleicher Weise wie beim ersten und zweiten Ausführungsbeispiel.

Insoweit als bei dem zweiten und dritten Ausführungsbeispiel die gleichen Bezugszeichen verwendet werden und keine gesonderte Beschreibung der verschiedenen Elemente erfolgt, wird vollinhaltlich auf die Beschreibung zum ersten Ausführungsbeispiel Bezug genommen.

## Patentansprüche

1. Laserverstärkersystem umfassend einen ein laseraktives Medium aufweisenden Festkörper (10), eine Anregungsquelle (30) zur Erzeugung eines angeregten Zustandes des laseraktiven Mediums und ein den Festkörper (10) mehrfach durchsetzendes Verstärkerstrahlungsfeld (40), aus welchem ein Laserstrahl (144) auskoppelbar ist, eine Strahlungsfeldführungsoptik (48), welche das Verstärkerstrahlungsfeld (40) in Form mehrerer lokal verschieden verlaufender einfallender Äste (102) in den Festkörper (10) eintreten und in Form mindestens eines lokal verschieden von den einfallenden Ästen (102) verlaufenden ausfallenden Astes (104) aus dem Festkörper (10) austreten lässt und welche mindestens eine Umlenkeinheit (44, 46) aufweist, welche aus mindestens einem der aus dem Festkörper (10) austretenden Äste (104) einen von diesem austretenden Ast (104) lokal getrennt verlaufenden in den Festkörper einfallenden Ast (102) bildet,
**dadurch gekennzeichnet, dass** die Strahlungsfeldführungsoptik (48) eine erste Umlenkeinheit (44) aufweist, welche das Verstärkerstrahlungsfeld (40) relativ zu einer ersten Umlenksymmetrieebene (96) umlenkt und eine zweite Umlenkeinheit (46) aufweist, welche das Verstärkerstrahlungsfeld (40) relativ zu einer zweiten Umlenksymmetrieebene (98) umlenkt und dass die Umlenksymmetrieebenen (96, 98) in einem Winkel (α) zueinander verlaufen, und dass jede dieser Umlenkeinheiten (44, 46) aus einem aus einem der ausfallenden Äste (104) gebildeten Eingangsast (142) des Verstärkerstrahlungsfeldes (40) einen von diesem lokal getrennt verlaufenden Ausgangsast (144) formt, aus welchem der entsprechende einfallende Ast (102) gebildet wird.

2. Laserverstärkersystem nach Anspruch 1, **dadurch gekennzeichnet, dass** die einfallenden Äste (102) stets in denselben Festkörper (10) einfallen.

3. Laserverstärkersystem nach Anspruch 2, **dadurch gekennzeichnet, dass** die einfallenden Äste (102) stets in denselben Volumenbereich des Festkörpers (10) einfallen.

4. Laserverstärkersystem nach einem der voranstehenden Ansprüche, **dadurch gekennzeichnet, dass** die Strahlungsfeldführungsoptik (48) aus dem ausfallenden Ast (104) nach einer Zwischenfokussierung (110) den einfallenden Ast (102) formt.

5. Laserverstärkersystem nach Anspruch 4, **dadurch gekennzeichnet, dass** die Zwischenfokussierung (110) im Bereich der Umlenkeinheit (44, 46) erfolgt.

6. Laserverstärkersystem nach Anspruch 5, **dadurch gekennzeichnet, dass** durch die Zwischenfokussierung ein zwischen zwei Umlenkelementen (56, 58; 76, 78) der Umlenkeinheit (44, 46) liegender Zwischenfokus (110) entsteht.

7. Laserverstärkersystem nach Anspruch 6, **dadurch gekennzeichnet, dass** der Zwischenfokus (110) ungefähr mittig zwischen den zwei Umlenkeinheiten (56, 58; 76, 78) liegt.

8. Laserverstärkersystem nach Anspruch 6 oder 7, **dadurch gekennzeichnet, dass** der optische Weg (AU) zwischen den beiderseits des Zwischenfokus (110) liegenden Umlenkelementen (56, 58; 76, 78) größer ist als ein Abstand (AB) zwischen einem in die Umlenkeinheit (44, 46) eintretenden Eingangsast (142) und einem aus der Umlenkeinheit (44, 46) austretenden Ausgangsast (144).

9. Laserverstärkersystem nach Anspruch 8, **dadurch gekennzeichnet, dass** der optische Weg (AU) zwischen den beiderseits des Zwischenfokus (110) liegenden Umlenkelementen (56, 58; 76, 78) mindestens dem zweifachen Abstand (AB) von Eingangsast (142) und Ausgangsast (144) entspricht.

10. Laserverstärkersystem nach einem der Ansprüche 6 bis 9, **dadurch gekennzeichnet, dass** die Umlenkeinheit (44, 46) das Verstärkerstrahlungsfeld (40) in einer Schleife (140) führt, die bezogen auf einen Eingangsast (142) und einen Ausgangsast (144) der Umlenkeinheit (44, 46) in einer Expansionsrichtung (EX) eine Ausdehnung (AU) aufweist, die größer als der Abstand (AB) zwischen dem Eingangsast (142) und dem Ausgangsast (144) ist.

11. Laserverstärkersystem nach Anspruch 10, **dadurch gekennzeichnet, dass** die Ausdehnung (AU) der Schleife (140) in der Expansionsrichtung (EX) mindestens das zweifache des Abstandes (AB) zwischen dem Eingangsast (142) und dem Ausgangsast (144) beträgt.

12. Laserverstärkersystem nach einem der voranstehenden Ansprüche, **dadurch gekennzeichnet, dass** die Strahlungsfeldführungsoptik (48) aus mehreren ausfallenden Ästen (104) mehrere lokal von den ausfallenden Ästen (104) verschieden verlaufende einfallende Äste (102) formt.

13. Laserverstärkersystem nach einem der voranstehenden Ansprüche, **dadurch gekennzeichnet, dass** die Strahlungsfeldführungsoptik (48) ein Verstärkerstrahlungsfeld (40) bildet, bei welchem die in den Festkörper (10) einfallenden Äste (102) und die aus dem Festkörper (10) ausfallenden Äste (104) kollimierte Äste sind.

14. Laserverstärkersystem nach Anspruch 13, **dadurch gekennzeichnet, dass** die Strahlungsfeldführungsoptik (48) mindestens einfach rekollimierend ausgebildet ist.

15. Laserverstärkersystem nach Anspruch 14, **dadurch gekennzeichnet, dass** die Strahlungsfeldführungsoptik (48) mehrfach rekollimierend ausgebildet ist.

16. Laserverstärkersystem nach Anspruch 14 oder 15, **dadurch gekennzeichnet, dass** durch die Strahlungsfeldführungsoptik (48) bei jedem Rekollimieren ein zwischenfokussierter Ast (106) gebildet wird.

17. Laserverstärkersystem nach Anspruch 16, **dadurch gekennzeichnet, dass** der zwischenfokussierte Ast (106) eine Umlenkeinheit (44, 46) der Strahlungsfeldführungsoptik durchläuft.

18. Laserverstärkersystem nach einem der Ansprüche 14 bis 17, **dadurch gekennzeichnet, dass** die Strahlungsfeldführungsoptik (48) für jede Rekollimierung eine Rekollimierungsoptik (42) umfasst.

19. Laserverstärkersystem nach Anspruch 18, **dadurch gekennzeichnet, dass** jeder zwischenfokussierte Ast (106) einen optischen Weg durchläuft, welcher der zweifachen Brennweite der jeweiligen Rekollimierungsoptik (42) entspricht.

20. Laserverstärkersystem nach Anspruch 18 oder 19, **dadurch gekennzeichnet, dass** alle Rekollimierungsoptiken (42) dieselbe Brennweite aufweisen.

21. Laserverstärkersystem nach einem der Ansprüche 18 bis 20, **dadurch gekennzeichnet, dass** mehrere Rekollimierungsoptiken zu einem strahlungsfeldformenden Element (42) zusammengefasst sind.

22. Laserverstärkersystem nach Anspruch 21, **dadurch gekennzeichnet, dass** die auf einer Seite des Festkörpers (10) angeordneten Rekollimierungsoptiken zu einem strahlungsfeldformenden Element (42, 42a) zusammengefasst sind.

23. Laserverstärkersystem nach Anspruch 22, **dadurch gekennzeichnet, dass** alle Rekollimierungsoptiken zu einem strahlungsfeldformenden Element (42) zusammengefasst sind.

24. Laserverstärkersystem nach einem der Ansprüche 19 bis 23, **dadurch gekennzeichnet, dass** das strahlungsfeldformenden Element (42) ein Linsensystem umfasst.

25. Laserverstärkersystem nach einem der Ansprüche 19 bis 23, **dadurch gekennzeichnet, dass** das strahlungsfeldformende Element als reflektierendes Element (42', 42a) ausgebildet ist.

26. Laserverstärkersystem nach Anspruch 25, **dadurch gekennzeichnet, dass** das strahlungsfeldformende Element (42', 42a, 42b)als Hohlspiegel ausgebildet ist.

27. Laserverstärkersystem nach einem der voranstehenden Ansprüche, **dadurch gekennzeichnet, dass** die Strahlungsfeldführungsoptik (48) mindestens zwei Umlenkeinheiten (44, 46) umfasst, wobei jede dieser Umlenkeinheiten (44, 46) aus einem aus einem der ausfallenden Äste (104) gebildeten Eingangsast (142) des Verstärkerstrahlungsfeldes (40) einen von diesem lokal getrennt verlaufenden Ausgangsast (144) formt, aus welchem der entsprechende einfallende Ast (102) gebildet wird.

28. Laserverstärkersystem nach einem der voranstehenden Ansprüche, **dadurch gekennzeichnet, dass** mindestens eine der Umlenkeinheiten (44) aus mindestens zwei aus aus dem Festkörper (10) ausfallenden Ästen (104) gebildeten Eingangsästen (142) mindestens zwei Ausgangsäste (144) formt, aus welchen die entsprechenden in den Festkörper (10) einfallenden Äste (104) gebildet werden.

29. Laserverstärkersystem nach einem der voranstehenden Ansprüche, **dadurch gekennzeichnet, dass** die Strahlungsfeldführungsoptik (48) zwei Umlenkeinheiten (44, 46) umfasst und ein Ausgangsast (144) jeder der Umlenkeinheiten (44, 46) zur Bildung eines in den Festkörper (10) einfallenden Astes (102) führt, aus welchem seinerseits nach Durchsetzen des Festkörpers (10) ein ausfallender Ast (104) entsteht, aus welchem ein Eingangsast (142) der jeweils anderen Umlenkeinheit (46, 44) gebildet wird.

30. Laserverstärkersystem nach einem der voranstehenden Ansprüche, **dadurch gekennzeichnet, dass** die Strahlungsfeldführungsoptik (48) eine erste und eine zweite Umlenkeinheit (44, 46) umfasst und dass die beiden Umlenkeinheiten (44, 46) jeweils durch Umlenkung des Verstärkerstrahlungsfeldes (40) relativ zu einer einzigen, der jeweiligen Umlenkeinheit (44, 46) zugeordneten Umlenksymmetrieebene (96, 98) mindestens drei aus mindestens drei verschiedenen ausfallenden Ästen (104) des Verstärkerstrahlungsfeldes gebildete Eingangsäste (142) in mindestens drei entsprechend lokal von den Eingangsästen (142) getrennt verlaufende Ausgangsäste (144) umsetzt, aus welchen mindestens drei einfallende Äste (102) entstehen.

31. Laserverstärkersystem nach einem der voranstehenden Ansprüche, **dadurch gekennzeichnet, dass** die Strahlungsfeldführungsoptik (48) mindestens eine Umlenkeinheit (44) aufweist und dass die Umlenkeinheit aus mindestens einem Eingangsast (142₁) einen bezüglich einer Mittelachse (94) der Strahlungsfeldführungsoptik (48) um einen derartigen Winkelabstand versetzt liegenden Ausgangsast (144₁) formt, dass im Winkelbereich zwischen diesem Eingangsast (142₁) und dem daraus gebildeten Ausgangsast (144₁) mindestens ein weiterer Eingangsast (142₃) liegt.

32. Laserverstärkersystem nach einem der voranstehenden Ansprüche, **dadurch gekennzeichnet, dass** die erste und die zweite Umlenksymmetrieebene (96, 98) in einem Winkel (α) zueinander verlaufen, welcher vorzugsweise 360° geteilt durch die Summe der bei einem Durchlauf des Verstärkerstrahlungsfeldes (40) durch die Strahlungsfeldführungsoptik (48) und den Festkörper (10) auftretenden einfallenden (102) und ausfallenden Äste (104) entspricht.

33. Laserverstärkersystem nach einem der voranstehenden Ansprüche, **dadurch gekennzeichnet, dass** die Umlenksymmetrieebene (96, 98) parallel zur Mittelachse (94) verläuft.

34. Laserverstärkersystem nach Anspruch 33, **dadurch gekennzeichnet, dass** die Umlenksymmetrieebene (96, 98) durch die Mittelachse (94) verläuft.

35. Laserverstärkersystem nach einem der voranstehenden Ansprüche, **dadurch gekennzeichnet, dass** die Eingangsäste (142) des Verstärkerstrahlungsfeldes (40) räumlich getrennt voneinander verlaufen.

36. Laserverstärkersystem nach Anspruch 35, **dadurch gekennzeichnet, dass** die Eingangsäste (142) des Verstärkerstrahlungsfeldes (40) relativ zueinander in Winkelabständen um die Mittelachse (94) der Strahlungsfeldführungsoptik (48) herum angeordnet sind.

37. Laserverstärkersystem nach einem der voranstehenden Ansprüche, **dadurch gekennzeichnet, dass** die Ausgangsäste (144) getrennt voneinander verlaufen.

38. Laserverstärkersystem nach einem der voranstehenden Ansprüche, **dadurch gekennzeichnet, dass** die Ausgangsäste (144) getrennt von den Eingangsästen (142) verlaufen.

39. Laserverstärkersystem nach einem der Ansprüche 35 bis 38, **dadurch gekennzeichnet, dass** die Ausgangsäste (144) relativ zueinander und relativ zu den Eingangsästen (142) in Winkelabständen um die Mittelachse (94) der Strahlungsfeldführungsoptik (48) herum angeordnet sind.

40. Laserverstärkersystem nach einem der voranstehenden Ansprüche, **dadurch gekennzeichnet, dass** die bei einem Durchlauf des Verstärkerstrahlungsfeldes (40) durch die Strahlungsfeldführungsoptik (48) entstehenden Eingangsäste (142) und Ausgangsäste (144) überlappungsfrei im Raum um die Mittelachse (94) der Strahlungsfeldführungsoptik (48) herum angeordnet sind.

41. Laserverstärkersystem nach Anspruch 40, **dadurch gekennzeichnet, dass** die Eingangsäste (142) und Ausgangsäste (144) sowie ein einfallender Ast (100) des Verstärkerstrahlungsfeldes bei einem Durchlauf durch die Strahlungsfeldführungsoptik (48) und den Festkörper (10) überlappungsfrei im Raum um die Mittelachse (94) der Strahlungsfeldführungsoptik (48) herum angeordnet sind.

42. Laserverstärkersystem nach einem der Ansprüche 38 bis 41, **dadurch gekennzeichnet, dass** die Eingangsäste (142) und die Ausgangsäste (144) jeweils in getrennten Raumsegmenten (130) um die Mittelachse (94) der Strahlungsfeldführungsoptik (48) herum angeordnet sind und sich innerhalb der Raumsegmente (130) quer zu ihrer Ausbreitungsrichtung ausdehnt.

43. Laserverstärkersystem nach Anspruch 42, **dadurch gekennzeichnet, dass** die Raumsegmente (130) so angeordnet sind, dass sie sich über ungefähr denselben Winkelbereich um die Mittelachse (94) herum erstrecken.

44. Laserverstärkersystem nach Anspruch 42 oder 43, **dadurch gekennzeichnet, dass** die Raumsegmente (130₂ bis 130₈) der Eingangsäste (142) und der Ausgangsäste (144) sowie das Raumsegment (130₁) des einfallenden Astes (100) im Wesentlichen die Mittelachse (94) umschließen.

## Claims

1. A laser amplifier system comprising a solid body (10) having a laser-active medium, an excitation source (30) for producing an excited state of the laser-active medium, and an amplifier radiation field (40) which passes a number of times through the solid body (10) and from which a laser beam (144) can be extracted, radiation field guiding optics (48), which make the amplifier radiation field (40) enter the solid body (10) in the form of a plurality of incident branches (102) with locally different trajectories and leave the solid body (10) in the form of at least one emerging branch (104) with a trajectory locally different from the incident branches (102), and the optics (48) have at least one deviating unit (44, 46) which forms, from at least one of the branches (104) emerging from the solid body (10), a branch (102) which enters the solid body with a trajectory locally separate from this emerging branch (104), **characterized in that** the radiation field guiding optics (48) have a first deviating unit (44), which deviates the amplifier radiation field (40) relative to a first deviating symmetry plane (96), and have a second deviating unit (46), which deviates the amplifier radiation field (40) relative to a second deviating symmetry plane (98), and **in that** the deviating symmetry planes (96, 98) run at an angle (α) with respect to one another, and **in that** each of these deviating units (44, 46) forms, from an input branch (142) of the amplifier radiation field (40) which is formed from one of the emerging branches (104), an output branch (144) with a trajectory locally separate from the input branch (142), and the corresponding incident branch (102) is formed from the output branch (144).

2. A laser amplifier system according to Claim 1, **characterized in that** the incident branches (102) always enter the same solid body (10).

3. A laser amplifier system according to Claim 2, **characterized in that** the incident branches (102) always enter the same volume region of the solid body (10).

4. A laser amplifier system according to any of the preceding claims, **characterized in that** the radiation field guiding optics (48) form the incident branch (102) from the emerging branch (104) after intermediate focusing (110).

5. A laser amplifier system according to Claim 4, **characterized in that** the intermediate focusing (110) takes place in the vicinity of the deviating unit (44, 46).

6. A laser amplifier system according to Claim 5, **characterized in that** an intermediate focus (110) lying between two deviating elements (56, 58; 76, 78) of the deviating unit (44, 46) is produced by the intermediate focusing.

7. A laser amplifier system according to Claim 6, **characterized in that** the intermediate focus (110) lies approximately centrally between the two deviating units (56, 58; 76, 78).

8. A laser amplifier system according to Claim 6 or Claim 7, **characterized in that** the optical path (AU) between the deviating elements (56, 58; 76, 78) lying on either side of the intermediate focus (110) is greater than a spacing (AB) between an input branch (142) entering the deviating unit (44, 46) and an output branch (144) emerging from the deviating unit (44, 46).

9. A laser amplifier system according to Claim 8, **characterized in that** the optical path (AU) between the deviating elements (56, 58; 76, 78) lying on either side of the intermediate focus (110) corresponds at least to two times the spacing (AB) of the input branch (142) and the output branch (144).

10. A laser amplifier system according to any of Claims 6 to 9, **characterized in that** the deviating unit (44, 46) guides the amplifier radiation field (40) in a loop (140) which, in relation to an input branch (142) and an output branch (144) of the deviating unit (44, 46), has an extent (AU) in an expansion direction (EX) which is greater than the spacing (AB) between the input branch (142) and the output branch (144).

11. A laser amplifier system according to Claim 10, **characterized in that** the extent (AU) of the loop (140) in the expansion direction (EX) is at least two times the spacing (AB) between the input branch (142) and the output branch (144).

12. A laser amplifier system according to any of the preceding claims, **characterized in that** the radiation field guiding optics (48) form, from a plurality of emerging branches (104), a plurality of incident branches (102) with trajectories locally different from the emerging branches (104).

13. A laser amplifier system according to any of the preceding claims, **characterized in that** the radiation field guiding optics (48) form an amplifier radiation field (40) in which the branches (102) entering the solid body (10) and the branches (104) emerging from the solid body (10) are collimated branches.

14. A laser amplifier system according to Claim 13, **characterized in that** the eradiation field guiding optics (48) are formed to be at least singly recollimating.

15. A laser amplifier system according to Claim 14, **characterized in that** the radiation field guiding optics (48) are formed for multiple recollimation.

16. A laser amplifier system according to Claim 14 or Claim 15, **characterized in that** an intermediate-focused branch (106) is formed by the radiation field guiding optics (48) during each recollimation.

17. A laser amplifier system according to Claim 16, **characterized in that** the intermediate-focused branch (106) passes through a deviating unit (44, 46) of the radiation field guiding optics.

18. A laser amplifier system according to any of Claims 14 to 17, **characterized in that** the radiation field guiding optics (48) have recollimating optics (42) for each recollimation.

19. A laser amplifier system according to Claim 18, **characterized in that** each intermediate-focused branch (106) travels along an optical path which corresponds to two times the focal length of the respective recollimating optics (42).

20. A laser amplifier system according to Claim 18 or Claim 19, **characterized in that** all the recollimating optics (42) have the same focal length.

21. A laser amplifier system according to any of Claims 18 to 20, **characterized in that** a plurality of recollimating optics are combined to form a radiation field shaping element (42).

22. A laser amplifier system according to Claim 21, **characterized in that** the recollimating optics arranged on one side of the solid body (10) are combined to form a radiation field shaping element (42, 42a).

23. A laser amplifier system according to Claim 22, **characterized in that** all the recollimating optics are combined to form a radiation field shaping element (42).

24. A laser amplifier system according to any of Claims 19 to 23, **characterized in that** the radiation field shaping element (42) comprises a lens system.

25. A laser amplifier system according to any of Claims 19 to 23, **characterized in that** the radiation field shaping element is formed as a reflecting element (42', 42a).

26. A laser amplifier system according to Claim 25, **characterized in that** the radiation field shaping element (42', 42a, 42b) is formed as a concave mirror.

27. A laser amplifier system according to any of the preceding claims, **characterized in that** the radiation field guiding optics (48) comprise at least two deviating units (44, 46), each of these deviating units (44, 46) forming, from an input branch (142) of the amplifier radiation field (40) which is formed from one of the emerging branches (104), an output branch (144) with a trajectory locally separate from the input branch (142), and the corresponding incident branch (102) is formed from the output branch (144).

28. A laser amplifier system according to any of the preceding claims, **characterized in that** at least one of the deviating units (44) forms, from at least two input branches (142) formed from branches (104) emerging from the solid body (10), at least two output branches (144) from which the corresponding branches (104) entering the solid body (10) are formed.

29. A laser amplifier system according to any of the preceding claims, **characterized in that** the radiation field guiding optics (48) comprise two deviating units (44, 46) and an output branch (144) of each of the deviating units (44, 46) leads to the formation of a branch (102) which enters the solid body (10), from which in turn, after it has passed through the solid body (10), an emerging branch (104) is produced, from which an input branch (142) of the respective other deviating unit (46, 44) is formed.

30. A laser amplifier system according to any of the preceding claims, **characterized in that** the radiation field guiding optics (48) comprise a first and a second deviating unit (44, 46), and **in that** the two deviating units (44, 46), respectively by deviating the amplifier radiation field (40) relative to a single deviating symmetry plane (96, 98) associated with the respective deviating unit (44, 46), convert at least three input branches (142), formed from at least three different emerging branches (104) of the amplifier radiation field, into at least three output branches (144) which have trajectories correspondingly locally separate from the input branches (142) and from which at least three incident branches (102) are produced.

31. A laser amplifier system according to any of the preceding claims, **characterized in that** the radiation field guiding optics (48) have at least one deviating unit (44), and **in that** the deviating unit forms, from at least one input branch (142₁), an output branch (144₁) which is offset in relation to a central axis (94) of the radiation field guiding optics (48) by an angular spacing such that at least one further input branch (142₃) lies in the angular region between this input branch (142₁) and the output branch (144₁) formed therefrom.

32. A laser amplifier system according to any of the preceding claims, **characterized in that** the first and second deviating symmetry planes (96, 98) run at an angle (α) with respect to one another which preferably corresponds to 360° divided by the sum of the incident (102) and emerging branches (104) arising during a pass of the amplifier radiation field (40) through the radiation field guiding optics (48) and the solid body (10).

33. A laser amplifier system according to any of the preceding claims, **characterized in that** the deviating symmetry plane (96, 98) runs parallel to the central axis (94).

34. A laser amplifier system according to Claim 33, **characterized in that** the deviating symmetry plane (96, 98) runs through the central axis (94).

35. A laser amplifier system according to any of the preceding claims, **characterized in that** the input branches (142) of the amplifier radiation field (40) have trajectories spatially separate from one another.

36. A laser amplifier system according to Claim 35, **characterized in that** the input branches (142) of the amplifier radiation field (40) are arranged relative to one another at angular spacings around the central axis (94) of the radiation field guiding optics (48).

37. A laser amplifier system according to any of the preceding claims, **characterized in that** the output branches (144) have separate trajectories from one another.

38. A laser amplifier system according to any of Claims 26 to 38, **characterized in that** the output branches (144) have separate trajectories from the input branches (142).

39. A laser amplifier system according to any of Claims 35 to 38, **characterized in that** the output branches (144) are arranged relative to one another and relative to the input branches (142) at angular spacings around the central axis (94) of the radiation field guiding optics (48).

40. A laser amplifier system according to any of the preceding claims, **characterized in that** the input branches (142) and output branches (144) produced during a pass of the amplifier radiation field (40) through the radiation field guiding optics (48) are arranged without overlap in the space around the central axis (94) of the radiation field guiding optics (48).

41. A laser amplifier system according to Claim 40, **characterized in that** the input branches (142) and output branches (144), as well as an incident branch (100) of the amplifier radiation field, during a pass through the radiation field guiding optics (48) and the solid body (10) are arranged without overlap in the space around the central axis (94) of the radiation field guiding optics (48).

42. A laser amplifier system according to any of Claims 38 to 41, **characterized in that** the input branches (142) and the output branches (144) are respectively arranged in separate space segments (130) around the central axis (94) of the radiation field guiding optics (48), and expand within the space segments (130) transversely with respect to their propagation direction.

43. A laser amplifier system according to Claim 42, **characterized in that** the space segments (130) are arranged in such a way that they extend over approximately the same angular region around the central axis (94).

44. A laser amplifier system according to Claim 42 or Claim 43, **characterized in that** the space segments (130₂ to 130₈) of the input branches (142) and of the output branches (144), as well as the space segment (130₁) of the incident branch (100), substantially surround the central axis (94).

## Revendications

1. Système d'amplification laser comprenant un corps solide (10) présentant un milieu actif d'un laser, une source d'excitation (30) destinée à générer un état excité du milieu actif d'un laser, et un champ de rayonnement amplificateur (40) traversant de manière multiple le corps solide (10), champ de rayonnement amplificateur à partir duquel un faisceau laser (144) peut être déclenché, un dispositif optique de guidage de champ de rayonnement (48), lequel laisse entrer dans le corps solide (10) le champ de rayonnement amplificateur (40) sous la forme de plusieurs branches incidentes (102) s'étendant différemment localement et le laisse émerger du corps solide (10) sous la forme d'au moins une branche émergente (104) s'étendant localement différemment des branches incidentes (102), et lequel comporte au moins une unité de déviation (44, 46), laquelle forme à partir d'au moins une des branches (104) émergeant du corps solide (10) une branche (102) entrant dans le corps solide, s'étendant de manière localement séparée de cette branche émergente (104), **caractérisé en ce que** le dispositif optique de guidage de champ de rayonnement (48) comporte une première unité de déviation (44), laquelle dévie le champ de rayonnement amplificateur (40) par rapport à un premier plan de symétrie de déviation (96) et comporte une seconde unité de déviation (46), laquelle dévie le champ de rayonnement amplificateur (40) par rapport à un second plan de symétrie de déviation (98) et **en ce que** les plans de symétrie de déviation (96, 98) s'étendent dans un angle (α) l'un par rapport à l'autre, et **en ce que** chacune de ces unités de déviation (44, 46) forme à partir d'une branche d'entrée (142) du champ de rayonnement amplificateur (40) formée d'une des branches émergentes (104) une branche de sortie (144) s'étendant de manière localement séparée de ladite branche d'entrée, branche de sortie à partir de laquelle est formée la branche incidente (102) correspondante.

2. Système d'amplification laser selon la revendication 1, **caractérisé en ce que** les branches incidentes (102) sont toujours incidentes dans le même corps solide (10).

3. Système d'amplification laser selon la revendication 2, **caractérisé en ce que** les branches incidentes (102) sont toujours incidentes dans la même zone de volume du corps solide (10).

4. Système d'amplification laser selon l'une quelconque des revendications précédentes, **caractérisé en ce que** le dispositif optique de guidage de champ de rayonnement (48) forme la branche incidente (102) à partir de la branche émergente (104) après une focalisation intermédiaire (110).

5. Système d'amplification laser selon la revendication 4, **caractérisé en ce que** la focalisation intermédiaire (110) s'effectue dans la zone de l'unité de déviation (44, 46).

6. Système d'amplification laser selon la revendication 5, **caractérisé en ce que** la focalisation intermédiaire fait apparaître un foyer intermédiaire (110) situé entre deux éléments de déviation (56, 58 ; 76, 78) de l'unité de déviation (44, 46).

7. Système d'amplification laser selon la revendication 6, **caractérisé en ce que** le foyer intermédiaire (110) se situe à peu près au milieu entre les deux unités de déviation (56, 58; 76, 78).

8. Système d'amplification laser selon la revendication 6 ou 7, **caractérisé en ce que** le chemin optique (AU) entre les éléments de déviation (56, 58 ; 76, 78) situés de part et d'autre du foyer intermédiaire (110) est plus grand qu'une distance (AB) entre une branche d'entrée (142) entrant dans l'unité de déviation (44, 46) et une branche de sortie (144) émergeant de l'unité de déviation (44, 46).

9. Système d'amplification laser selon la revendication 8, **caractérisé en ce que** le chemin optique (AU) entre les éléments de déviation (56, 58 ; 76, 78) situés de part et d'autre du foyer intermédiaire (110) correspond au moins à deux fois la distance (AB) entre la branche d'entrée (142) et la branche de sortie (144).

10. Système d'amplification laser selon l'une quelconque des revendications 6 à 9, **caractérisé en ce que** l'unité de déviation (44, 46) guide le champ de rayonnement amplificateur (40) dans une boucle (140) qui, par rapport à une branche d'entrée (142) et une branche de sortie (144) de l'unité de déviation (44, 46), comporte dans une direction d'expansion (EX) une extension (AU) qui est plus grande que la distance (AB) entre la branche d'entrée (142) et la branche de sortie (144).

11. Système d'amplification laser selon la revendication 10, **caractérisé en ce que** l'extension (AU) de la boucle (140) dans la direction d'expansion (EX) correspond au moins au double de la distance (AB) entre la branche d'entrée (142) et la branche de sortie (144).

12. Système d'amplification laser selon l'une quelconque des revendications précédentes, **caractérisé en ce que** le dispositif optique de guidage de champ de rayonnement (48) forme à partir de plusieurs branches émergentes (104) des branches incidentes (102), s'étendant localement différemment des branches émergentes (104).

13. Système d'amplification laser selon l'une quelconque des revendications précédentes, **caractérisé en ce que** le dispositif optique de guidage de champ de rayonnement (48) forme un champ de rayonnement amplificateur (40), dans lequel les branches (102) entrant dans le corps solide (10) et les branches (104) émergeant du corps solide (10) sont des branches collimatées.

14. Système d'amplification laser selon la revendication 13, **caractérisé en ce que** le dispositif optique de guidage de champ de rayonnement (48) est conçu pour au moins une seule recollimation.

15. Système d'amplification laser selon la revendication 14, **caractérisé en ce que** le dispositif optique de guidage de champ de rayonnement (48) est conçu pour une recollimation multiple.

16. Système d'amplification laser selon la revendication 14 ou 15, **caractérisé en ce qu'**une branche (106) focalisée de manière intermédiaire est formée par l'intermédiaire du dispositif optique de guidage de champ de rayonnement (48) à chaque recollimation.

17. Système d'amplification laser selon la revendication 16, **caractérisé en ce que** la branche (106) focalisée de manière intermédiaire passe par une unité de déviation (44, 46) du dispositif optique de guidage de champ de rayonnement.

18. Système d'amplification laser selon l'une quelconque des revendications 14 à 17, **caractérisé en ce que** le dispositif optique de guidage de champ de rayonnement (48) comprend pour chaque recollimation un dispositif optique de recollimation (42).

19. Système d'amplification laser selon la revendication 18, **caractérisé en ce que** chaque branche (106) focalisée de manière intermédiaire parcourt un chemin optique, lequel correspond à deux fois la distance focale du dispositif optique de recollimation respectif (42).

20. Système d'amplification laser selon la revendication 18 ou 19, **caractérisé en ce que** tous les dispositifs optiques de recollimation (42) présentent la même distance focale.

21. Système d'amplification laser selon l'une quelconque des revendications 18 à 20, **cara-térisé en ce que** plusieurs dispositifs optiques de recollimation sont réunis en un élément (42) formant un champ de rayonnement.

22. Système d'amplification laser selon la revendication 21, **caractérisé en ce que** les dispositifs optiques de recollimation disposés d'un côté du corps solide (10) sont réunis en un élément (42, 42a) formant un champ de rayonnement.

23. Système d'amplification laser selon la revendication 22, **caractérisé en ce que** tous les dispositifs optiques de recollimation sont réunis en un élément (42) formant un champ de rayonnement.

24. Système d'amplification laser selon l'une quelconque des revendications 19 à 23, **caractérisé en ce que** l'élément (42) formant un champ de rayonnement comprend un système de lentilles.

25. Système d'amplification laser selon l'une quelconque des revendications 19 à 23, **caractérisé en ce que** l'élément formant un champ de rayonnement est conçu comme élément réfléchissant (42', 42a).

26. Système d'amplification laser selon la revendication 25, **caractérisé en ce que** l'élément (42', 42a, 42b) formant un champ de rayonnement est conçu comme miroir concave.

27. Système d'amplification laser selon l'une quelconque des revendications précédentes, **caractérisé en ce que** le dispositif optique de guidage de champ de rayonnement (48) comprend au moins deux unités de déviation (44, 46), chacune de ces unités de déviation (44, 46) formant à partir d'une branche d'entrée (142) du champ de rayonnement amplificateur (40) formée d'une des branches émergentes (104) une branche de sortie (144) s'étendant de manière localement séparée de ladite branche d'entrée, branche de sortie à partir de laquelle est formée la branche incidente correspondante (102).

28. Système d'amplification laser selon l'une quelconque des revendications précédentes, **caractérisé en ce que** au moins une des unités de déviation (44) forme à partir d'au moins deux branches d'entrée (142) formées de branches (104) émergeant du corps solide (10) au moins deux branches de sortie (144), à partir desquelles sont formées les branches correspondantes (104) entrant dans le corps solide (10).

29. Système d'amplification laser selon l'une quelconque des revendications précédentes, **caractérisé en ce que** le dispositif optique de guidage de champ de rayonnement (48) comprend deux unités de déviation (44, 46), et **en ce qu'**une branche de sortie (144) de chacune des unités de déviation (44, 46) conduit à la formation d'une branche (102) entrant dans le corps solide (10), à partir de laquelle se forme de son côté, après traversée du corps solide (10), une branche émergente (104), à partir de laquelle est formée une branche d'entrée (142) de respectivement l'autre unité de déviation (44, 46).

30. Système d'amplification laser selon l'une quelconque des revendications précédentes, **caractérisé en ce que** le dispositif optique de guidage de champ de rayonnement (48) comprend une première et une seconde unités de déviation (44, 46) et **en ce que** les deux unités de déviation (44, 46), respectivement par déviation du champ de rayonnement amplificateur (40) relativement à un seul plan de symétrie de déviation (96, 98) associé à l'unité de déviation respective (44, 46), changent au moins trois branches d'entrée (142) formées d'au moins trois branches émergentes (104) différentes en au moins trois branches de sortie (144) s'étendant en conséquence de manière localement séparée des branches d'entrée (142), branches de sortie à partir desquelles se forment au moins trois branches incidentes (102).

31. Système d'amplification laser selon l'une quelconque des revendications précédentes, **caractérisé en ce que** le dispositif optique de guidage de champ de rayonnement (48) comporte au moins une unité de déviation (44) et **en ce que** l'unité de déviation forme à partir d'au moins une branche d'entrée (142₁) une branche de sortie (144₁) décalée d'un tel écart angulaire par rapport à un axe médian (94) du dispositif optique de guidage de champ de rayonnement (48) qu'au moins une branche d'entrée supplémentaire (142₃) se situe dans le secteur angulaire entre cette branche d'entrée (142₁) et la branche de sortie (144₁) formée à partir de celle-ci.

32. Système d'amplification laser selon l'une quelconque des revendications précédentes, **caractérisé en ce que** le premier et le second plans de symétrie de déviation (96, 98) s'étendent l'un par rapport à l'autre dans un angle (α), lequel correspond de préférence à 360° divisé par la somme des branches émergentes (104) et incidentes (102) apparaissant lorsque le champ de rayonnement amplificateur (40) passe par le dispositif optique de guidage de champ de rayonnement (48) et le corps solide (10).

33. Système d'amplification laser selon l'une quelconque des revendications précédentes, **caractérisé en ce que** le plan de symétrie de déviation (96, 98) s'étend parallèlement à l'axe médian (94).

34. Système d'amplification laser selon la revendication 33, **caractérisé en ce que** le plan de symétrie de déviation (96, 98) passe par l'axe médian (94).

35. Système d'amplification laser selon l'une quelconque des revendications précédentes, **caractérisé en ce que** les branches d'entrée (142) du champ de rayonnement amplificateur (40) s'étendent séparément les unes des autres dans l'espace.

36. Système d'amplification laser selon la revendication 35, **caractérisé en ce que** les branches d'entrée (142) du champ de rayonnement amplificateur (40) sont disposées autour de l'axe médian (94) du dispositif optique de guidage de champ de rayonnement (48) avec des écarts angulaires les unes par rapport aux autres.

37. Système d'amplification laser selon l'une quelconque des revendications précédentes, **caractérisé en ce que** les branches de sortie (144) s'étendent séparément les unes des autres.

38. Système d'amplification laser selon l'une quelconque des revendications précédentes, **caractérisé en ce que** les branches de sortie (144) s'étendent séparément des branches d'entrée (142).

39. Système d'amplification laser selon l'une quelconque des revendications 35 à 38, **caractérisé en ce que** les branches de sortie (144) sont disposées autour de l'axe médian (94) du dispositif optique de guidage de champ de rayonnement (48) avec des écarts angulaires les unes par rapport aux autres et par rapport aux branches d'entrée (142).

40. Système d'amplification laser selon l'une quelconque des revendications précédentes, **caractérisé en ce que** les branches d'entrée (142) et les branches de sortie (144) apparaissant lorsque le champ de rayonnement amplificateur (40) passe par le dispositif optique de guidage de champ de rayonnement (48) sont disposées autour de l'axe médian (94) du dispositif optique de guidage de champ de rayonnement (48) sans chevauchement dans l'espace.

41. Système d'amplification laser selon la revendication 40, **caractérisé en ce que** les branches d'entrée (142) et les branches de sortie (144) ainsi qu'une branche incidente (100) du champ de rayonnement amplificateur sont disposées autour de l'axe médian (94) du dispositif optique de guidage de champ de rayonnement (48) sans chevauchement dans l'espace lors d'un passage par le dispositif optique de guidage de champ de rayonnement (48) et le corps solide (10).

42. Système d'amplification laser selon l'une quelconque des revendications 38 à 41, **caractérisé en ce que** les branches d'entrée (142) et les branches de sortie (144) sont disposées autour de l'axe médian (94) du dispositif optique de guidage de champ de rayonnement (48) respectivement dans des segments spatiaux (130) séparés et s'étendent à l'intérieur des segments spatiaux (130) transversalement à leur direction de propagation.

43. Système d'amplification laser selon la revendication 42, **caractérisé en ce que** les segments spatiaux (130) sont disposés de telle manière qu'ils s'étendent sur à peu près le même secteur angulaire autour de l'axe médian (94).

44. Système d'amplification laser selon la revendication 42 ou 43, **caractérisé en ce que** les segments spatiaux (130₂ à 130₈) des branches d'entrée (142) et des branches de sortie (144) ainsi que le segment spatial (130₁) de la branche incidente (100) entourent essentiellement l'axe médian (94).
